# EUROPÄISCHE PATENTSCHRIFT

(11) **EP 2 453 991 B1**
(45) Veröffentlichungstag und Bekanntmachung des Hinweises auf die Patenterteilung: **25.11.2015**
(21) Anmeldenummer: 10757391.7
(22) Anmeldetag: 14.07.2010
(51) Int. Cl.: A63B 69/00, A63B 21/02, A63B 22/00, A63B 26/00, A63B 24/00, A63B 21/00, A63F 13/20, G09B 9/06, G09B 19/06, G09B 19/00, A63B 22/18, G09B 9/04

(54) **VORRICHTUNG FÜR GLEICHGEWICHTSÜBUNGEN UND GLEICHGEWICHTSSPIELE MIT VERÄNDERBAREN RÜCKSTELLKRÄFTEN**
DEVICE FOR BALANCE EXERCISES AND BALANCE GAMES USING VARIABLE RESTORING FORCES
DISPOSITIF POUR EXERCICES ET JEUX D'ÉQUILIBRE À FORCES DE RAPPEL VARIABLES

(30) Priorität: 16.07.2009 DE 102009033440
(43) Veröffentlichungstag der Anmeldung: 23.05.2012
(73) Patentinhaber: EXTRALEVEL GbR, 81241 München (DE)
(72) Erfinder: KLEIN, Maximilian, 80801 München (DE); LUTZ, Peter, 81241 München (DE)
(74) Vertreter: Klein, Maximilian
(86) Internationale Anmeldenummer: PCT/EP2010/004279
(87) Internationale Veröffentlichungsnummer: WO 2011/006643

(56) Entgegenhaltungen:
- WO-A1-2008/043118
- DE-A1-102007 048 399
- US-A1- 2007 184 953

## Beschreibung

Die Erfindung betrifft eine Vorrichtung für Gleichgewichtsübungen und Gleichgewichtsspiele eines Benutzers, umfassend ein Basisteil, ein Stützteil für den Körper des Benutzers, das relativ zum Basisteil um eine Längsachse X und eine Querachse Y verkippbar ist, und eine Rückstellvorrichtung zur Erzeugung einer Rückstellkraft, die einer Verkippung des Stützteils entgegenwirkt. Eine derartige Vorrichtung wird häufig auch als ,Balance Board' bezeichnet.

Die aus dem Stand der Technik bekannten Balance Boards dienen unter anderem als Eingabegeräte für Computerspiele. Oft kommen diese Balance Boards beispielsweise bei Computerspielen zum Einsatz, bei denen Sportarten wie Skateboardfahren, Snowboardfahren oder Wellenreiten simuliert werden.

Ein weiteres Anwendungsgebiet von Balance Boards ist der Einsatz als Trainings- oder Rehabilitationsgerät, mit Hilfe dessen Benutzer die Koordination bestimmter Bewegungsabläufe und den Gleichgewichtssinn trainieren können. Diese Trainings- oder Rehabilitationsgeräte sind für gewöhnlich nicht für eine Benutzung im Zusammenhang mit einem Computer ausgelegt und verfügen deshalb auch nicht über Sensorvorrichtungen zur Erzeugung von Sensorsignalen, die von einem Computer weiterverarbeitet werden.

Vorrichtungen für Gleichgewichtsübungen und Gleichgewichtsspiele (Balance Boards) sind im Stand der Technik hinlänglich bekannt. Der hier vorgestellten Erfindung kommen die folgenden Druckschriften am Nächsten: WO-A-2008/043118 offenbart einen Trainingsgerät für Gleichgewichtstraining.

US 2008/0261696 A1 offenbart eine Vorrichtung zur Erfassung von Gewichtsverlagerungen und Sprungbewegungen eines Benutzers. Sie umfasst eine Stützfläche, welche auf vier Standfüßen gelagert ist. Zwischen der Stützfläche und den vier Standfüßen sind jeweils balkenförmige Federelemente angeordnet. Im Rahmen der stark eingeschränkten Verformbarkeit dieser Federelemente ist die Stützfläche relativ zu den Standfüßen um zwei horizontale, zueinander orthogonale Raumachsen X und Y verkippbar sowie entlang einer vertikalen, zu den Raumachsen X und Y orthogonalen Raumachse Z bewegbar gelagert. An den balkenförmigen Federelementen sind jeweils Dehnungsmessstreifen angebracht, welche die Verformung der Federelemente erfassen. Mittelbar werden über die Verformung der Federelemente Gewichtsverlagerungen und Sprungbewegungen des Benutzers erfasst.

US 7,008,359 B2 offenbart eine Vorrichtung für Gleichgewichtsübungen. Sie umfasst ein Basisteil, eine Stützfläche und ein zentrales Federelement, welches zwischen Basisteil und Stützfläche angeordnet und mit diesen jeweils fest verbunden ist. Die Stützfläche kann im Verhältnis zum Basisteil verkippt und verdreht werden, wobei das Federelement diesen Bewegungen entgegenwirkende Rückstellkräfte erzeugt. Die Vorrichtung verfügt über einen Einstellmechanismus, mit dem diese Rückstellkräfte verändert werden können. Der Einstellmechanismus umfasst vier keilartige Sperrvorrichtungen, die gleichzeitig radial (relativ zu einer zentralen und vertikalen Hochachse Z) verschoben werden können. Werden die Sperrvorrichtungen nach innen geschoben, verkleinert sich den Raum für eine elastische Verformung des zentralen Federelements, was eine Erhöhung der Rückstellkraft und zugleich eine Einschränkung des maximalen Kippwinkels bewirkt.

EP 0 966 724 B1 offenbart eine Vorrichtung zur Erfassung von Gewichtsverlagerungen, Drehbewegungen und Sprungbewegungen eines Benutzers. Eine Stützfläche ist auf einem Basisteil um zwei horizontale, zueinander orthogonale Raumachsen X und Y verkippbar sowie um eine vertikale, zu den Raumachsen X und Y orthogonale Raumachse Z drehbar und entlang dieser Raumachse Z bewegbar gelagert. Die Rückstellkräfte, die einer Verkippung und einer Vertikalbewegung der Stützfläche entgegenwirken, werden von einem Luftschlauch erzeugt und können über eine Veränderung des Fülldrucks in dem Luftschlauch eingestellt werden. Der Luftschlauch ist zwischen dem Basisteil und einem Zwischenteil angeordnet, welches relativ zu der Stützfläche kippfest aber drehbar gelagert ist. Eine Sensorvorrichtung erfasst die Bewegungen der Stützfläche und erzeugt entsprechende Sensorsignale.

Allen diesen Balance Boards ist gemeinsam, dass sie eine auf einem Basisteil verkippbare Stützfläche für den Körper des Benutzers und eine Rückstellvorrichtung zur Erzeugung einer der Verkippung entgegenwirkenden Rückstellkraft aufweisen. Sind die Balance Boards für eine Verwendung zur Steuerung von Computerspielen ausgelegt, verfügen sie außerdem über eine Sensorvorrichtung, welche Gewichtsverlagerungen auf der Stützfläche erfasst.

Der Nachteil der in US 2008/0261696 A1 beschriebenen Vorrichtung besteht darin, dass die Verkippbarkeit der Stützfläche so stark eingeschränkt ist, dass eine Verkippung vom Benutzer kaum mehr wahrnehmbar ist. Dies ist deshalb von Nachteil, weil der Benutzer keine unmittelbare Rückmeldung über die von ihm ausgeführten Bewegungen erhält. Eine Rückmeldung erfolgt vielmehr nur mittelbar über das jeweilige Computerprogramm und die Signale, die es nach Verarbeitung der Eingabesignale wieder ausgibt. Würde sich dagegen die Stützfläche der in US 2008/0261696 A1 beschriebenen Vorrichtung bei einer Gewichtsverlagerung wahrnehmbar verkippen, erhielte der Benutzer eine unmittelbare physische Rückmeldung über die von ihm ausgeführten Bewegungen. Der Benutzer könnte damit seine Gewichtsverlagerungen wesentlich besser dosieren, was im Ergebnis die Steuerung eines Computerspiels erleichtern würde.

Ein weiterer Nachteil der stark eingeschränkten Verkippbarkeit der Stützfläche der in US 2008/0261696 A1 beschriebenen Vorrichtung tritt bei dessen Verwendung zur Steuerung von Computerspielen zutage, die Sportarten wie Skateboardfahren, Snowboardfahren oder Wellenreiten simulieren. Bei diesen Sportarten führen die entsprechenden Sportgeräte (Skateboards, Snowboards oder Surfbretter) in der Realität deutliche Bewegungen aus, wobei der Benutzer über die Veränderung der Raumlage des Sportgeräts wichtige Rückmeldungen über dessen Interaktion mit der Umgebung erhält.

Da die Stützfläche der in US 2008/0261696 A1 beschriebenen Vorrichtung ihre Raumlage nicht in ähnlicher Weise verändert wie beispielsweise das Sportgerät, welches die Vorrichtung in einem Computerspiel repräsentiert, gewinnt der Benutzer nicht den Eindruck, er trete über die in US 2008/0261696 A1 beschriebenen Vorrichtung mit der virtuellen Umgebung des Computerspiels in Interaktion. Dies beeinträchtigt den Eindruck einer virtuellen Realität und trübt das Spielerlebnis des Benutzers.

Ein weiterer Nachteil der stark eingeschränkten Verkippbarkeit der Stützfläche der in US 2008/0261696 A1 beschriebenen Vorrichtung ist es schließlich, dass sich diese Vorrichtung nur sehr eingeschränkt als Trainings- oder Rehabilitationsgerät einsetzen lässt. Der Grund hierfür ist, dass sich Kraft und Koordination bestimmter Muskelgruppen wie beispielsweise der Sprunggelenkmuskulatur nur dann verbessern lassen, wenn der Benutzer bzw. Patient auf einer deutlich verkippbaren Stützfläche steht und er diese Verkippung mit seinem Bewegungsapparat ausgleichen muss.

Ein weiterer Nachteil der in US 2008/0261696 A1 beschriebenen Vorrichtung besteht darin, dass die Rückstellkräfte nicht vom Benutzer verändert werden können. Bei der ohnehin sehr stark eingeschränkten Verkippbarkeit der Stützfläche der in US 2008/0261696 A1 beschriebenen Vorrichtung ist dieser Nachteil allerdings hinnehmbar, da das Bedürfnis nach einer Anpassung der Rückstellkräfte erst mit einer zunehmend deutlichen Verkippbarkeit der Stützfläche wächst. Denn je größer die Kippbewegungen der Stützfläche ausfallen, umso schwieriger wird es für einen Benutzer, die Balance zu halten, wenn keine oder zu geringe Rückstellkräfte einer Verkippung der Stützfläche entgegenwirken.

Wie groß die von einem Benutzer als passend empfundenen Rückstellkräfte sind, hängt allerdings nicht nur von seiner Geschicklichkeit und seinen Vorlieben ab, sondern auch ganz wesentlich von seiner Masse. Bei einem für den Massenmarkt konzipierten Balance Board wäre es deshalb wünschenswert, wenn sich dessen Rückstellkräfte sowohl an die Kräfte anpassen lassen, die ein 15kg-leichtes Kind auf das Balance Board ausübt, als auch an die Kräfte, die ein 150kg-schwerer Erwachsener auf das Balance Board ausübt.

Die in US 7,008,359 B2 beschriebene Vorrichtung bietet eine deutlich wahrnehmbare Verkippbarkeit der Stützfläche, was für die von den Erfindern vorgesehene Verwendung als Trainings- und Rehabilitationsgerät auch unbedingt erforderlich ist. Konsequenterweise lassen sich die Rückstellkräfte bei der in US 7,008,359 B2 beschriebenen Vorrichtung verändern. Die Rückstellkräfte werden erhöht, indem der sog. Sperrmechanismus den Raum für eine elastische Verformung des zentralen Gummi-Federelements verkleinert, was im Ergebnis eine Vorspannung des Federelements bewirkt.

Ein Nachteil der in US 7,008,359 B2 beschriebenen Vorrichtung ist allerdings, dass die Erhöhung der Rückstellkräfte mit einer zunehmenden Einschränkung der Verkippbarkeit der Stützfläche einhergeht. Es wurde jedoch bereits erwähnt, dass sich bestimmte Trainingseffekte für den Benutzer nur einstellen, wenn dieser deutliche Kippbewegungen einer Stützfläche ausgleichen muss. Konstruktionsbedingt wird also nicht jeder Benutzer den gleichen Trainingseffekt mit dieser Vorrichtung erzielen können.

Ein weiterer Nachteil der in US 7,008,359 B2 beschriebenen Vorrichtung ist es, dass sich die Rückstellkräfte nicht für verschiedene Kipprichtungen unabhängig voneinander verändern lassen. Zwar ist das zentrale Gummifederelement so ausgelegt, dass es bei einer Verkippung um die Längsachse des Geräts kleinere Rückstellkräfte erzeugt als bei einer Verkippung um die Querachse. Dies trägt dem Umstand Rechnung, dass ein auf der Stützfläche stehender Benutzer durch eine Gewichtsverlagerung zwischen Vorfuß und Ferse seiner beider Füße geringere Kräfte auf die Stützfläche auszuüben vermag als durch eine Gewichtsverlagerung zwischen seinem linkem und rechtem Fuß - dies zumindest dann, wenn der Benutzer mit seinen beiden Füßen bequem in Schulterbreite auf der Stützfläche steht.

Da jedoch der Sperrmechanismus der in US 7,008,359 B2 beschriebenen Vorrichtung immer gleichzeitig an vier Stellen des zentralen Gummifederelements eingreift und damit auch gleichzeitig die Rückstellkräfte bei einer Verkippung um die Längsachse und bei einer Verkippung um die Querachse verändert, ist das Verhältnis der Rückstellkräfte für Längs- und Querachse konstruktionsbedingt festgelegt und nicht veränderbar.

Allerdings ist es erfahrungsgemäß nicht so, dass zwei Benutzer, welche beispielsweise die gleichen Rückstellkräfte bei einer Verkippung um die Querachse (d.h. bei einer Gewichtsverlagerung zwischen linkem und rechtem Fuß und umgekehrt) bevorzugen, immer auch die gleichen Rückstellkräfte bei einer Verkippung um die Längsachse (d.h. bei einer Gewichtsverlagerung zwischen Vorfuß und Ferse und umgekehrt) als passend empfinden. Dies ist insbesondere dann nicht der Fall, wenn diese beiden Benutzer unterschiedlich große Füße haben. Denn bei unterschiedlich großen Füßen erfolgt die Krafteinleitung an verschiedenen Stellen, woraus sich wiederum ungleiche Hebelverhältnisse ergeben.

Im besten Fall sollte sich aber nicht nur das Verhältnis der Rückstellkräfte für Längs- und Querachse zueinander verändern lassen. Für bestimmte Übungen, beispielsweise zur Rehabilitation bei einseitigen Verletzungen, kann es erwünscht sein, dass bei einer Verlagerung des Gewichts auf den linken Fuß größere Rückstellkräfte erzeugt werden als bei einer Verlagerung des Gewichts auf den rechten Fuß und umgekehrt bzw. bei einer Verlagerung des Gewichts auf den Vorfuß größere Rückstellkräfte erzeugt werden können als bei einer Verlagerung des Gewichts auf die Ferse und umgekehrt.

Bei der in EP 0 966 724 B1 beschriebenen Vorrichtung lassen sich die Rückstellkräfte zwar ohne eine Einschränkung der Verkippbarkeit der Stützfläche verändern, da hier die Vergrößerung der Rückstellkraft nur über eine Erhöhung des Drucks im Luftschlauch erreicht wird und nicht wie bei der in US 7,008,359 B2 beschriebenen Vorrichtung darüber, dass der Raum für die elastische Verformung des Federelements verkleinert wird.

Die Luftfederungstechnik der in EP 0 966 724 B1 beschriebenen Vorrichtung weist jedoch auch Nachteile auf. Damit die Luftfederung nicht eine zu stark progressive Federkennlinie aufweist, wodurch die Federung vom Benutzer als zu hart empfunden würde, muss der Luftschlauch vergleichsweise groß dimensioniert sein. Folglich müssen die Bauteile, zwischen denen der Luftschlauch angeordnet ist und an denen er angreift (in EP 0 966 724 B1 sind dies das Basisteil und das Zwischenteil), ebenso groß ausgelegt werden. Dies führt im Ergebnis zu großen Abmessungen und einem hohen Gewicht der Gesamtvorrichtung, was wiederum deren Handhabung unpraktisch macht. Ferner wirkt sich der verhältnismäßig hohe Materialeinsatz ungünstig auf die Herstellungskosten aus.

Ein weiterer Nachteil besteht darin, dass Zubehör benötigt wird, um den Druck im Luftschlauch anzupassen, beispielsweise eine Luftpumpe mit Druckmessgerät. Dies erhöht wiederum die Kosten der Gesamtvorrichtung. Darüber hinaus kann ein Benutzer das Hantieren mit dem Zubehör oder das Befüllen des Luftschlauchs an sich als unbequem empfinden.

Außerdem ist auch bei der in EP 0 966 724 B1 beschriebenen Vorrichtung das Verhältnis der Rückstellkräfte in den verschiedenen Kipprichtungen durch die Anordnung des Luftschlauchs konstruktionsbedingt festgelegt und nicht veränderbar. Die oben zu US 7,008,359 B2 erläuterten Nachteile treffen insoweit auch auf EP 0 966 724 B1 zu.

Noch ein zusätzlicher Nachteil ergibt sich, wenn die in EP 0 966 724 B1 beschriebene Vorrichtung auch für die Computer-Simulation bestimmter Sportarten wie Snowboardfahren oder Wellenreiten verwendet wird. Hier ließe sich ein besserer Eindruck einer virtuellen Realität erzielen, wenn die Rückstellkräfte beispielsweise so eingestellt werden könnten, dass sich das Stützteil nach vom weniger leicht kippen lässt als nach hinten, was jedoch auch bei EP 0 966 724 B1 nicht möglich ist.

Demzufolge ist es Aufgabe der vorliegenden Erfindung, die von den Erfindern DYNAMIC BOARD genannt wird, ein sicheres, kompaktes und kostengünstig zu produzierendes Balance Board mit einer Rückstellvorrichtung bereitzustellen, die eine möglichst flexible und einfache Anpassung der Rückstellkräfte an die Bedürfnisse verschiedener Benutzer ermöglicht, ohne dabei die Funktionalität, insbesondere die Verkippbarkeit der Stützfläche einzuschränken.

Gemäß der Erfindung wird diese Aufgabe bei einer gattungsgemäßen Vorrichtung durch die Merkmale des Anspruchs 1 gelöst.

Im Sinne der Erfindung ist eine Rückstellvorrichtung dazu ausgelegt, auswechselbare Federelemente mit unterschiedlichen Abmessungen oder mit unterschiedlicher Federkraft einzusetzen, wenn sich Federelemente austauschen lassen, ohne irreversible Veränderungen an der Gesamtvorrichtung vornehmen zu müssen. Keine Veränderung in diesem Sinne stellt es dar, wenn beispielsweise die vorhandenen Federlemente durch kleiner dimensionierte Federlemente ersetzt werden sollen und zu diesem Zweck z.B. ein Ausgleichsstück eingesetzt werden muss. Eine Rückstellvorrichtung ist also immer dann dazu ausgelegt, auswechselbare Federelemente mit unterschiedlichen Abmessungen oder mit unterschiedlicher Federkraft einzusetzen, wenn es die Vorrichtung ermöglicht, den Austausch eines Federelements gegen ein anderes Federelement mit unterschiedlichen Abmessungen oder mit unterschiedlicher Federkraft jederzeit rückgängig zu machen.

Die Rückstellvorrichtung so auszulegen, dass auswechselbare Federelemente mit unterschiedlichen Abmessungen oder mit unterschiedlicher Federkraft eingesetzt werden können, bietet wesentliche Vorteile gegenüber einigen im Stand der Technik bekannten Rückstellvorrichtungen, die eine Anpassung der Rückstellkräfte an die unterschiedlichen Bedürfnisse von Benutzern erlauben.

Eine zuvor bereits erwähnte, im Stand der Technik bekannte Möglichkeit, Rückstellkräfte zu erhöhen, besteht darin, das Federelement mittels einer Einstellvorrichtung unter Vorspannung zu setzen. Die Vorspannung eines Federelements führt jedoch zwangsläufig zu einer Verkürzung des Federwegs, welcher für die Rückstellung einer Verkippung noch zur Verfügung steht. Dies kann zur Folge haben, dass schwerere Benutzer, welche größere Rückstellkräfte bevorzugen, nicht die eigentlich gewünschten Kippwinkel realisieren können, weil zuvor schon die maximale Federkompression erreicht wird. Alternativ wäre ein Federelement zu verwenden, dessen Federweg so lang ist, dass selbst bei einer entsprechenden Vorspannung immer noch ein ausreichender Federweg zur Verfügung steht, um den gewünschten Kippwinkel zu realisieren. Dadurch würde sich allerdings auch die Bauhöhe der Vorrichtung vergrößern. Darüber hinaus wäre dann für Benutzer, die keine oder nur eine geringe Vorspannung benötigen, die Stützfläche höher über dem Boden gelagert als eigentlich notwendig, wodurch sich die Verletzungsgefahr bei einem Abrutschen von der Stützfläche erhöht.

Sieht man also eine Anpassung der Rückstellkräfte über eine Erhöhung der Vorspannung vor, wirkt sich dies stets nachteilig entweder auf die Bauhöhe oder aber auf den maximalen Kippwinkel der Stützfläche aus. Ist dagegen die Rückstellvorrichtung dazu ausgelegt, auswechselbare Federelemente mit unterschiedlichen Abmessungen oder mit unterschiedlicher Federkraft einzusetzen, werden sich für jeden Benutzer Federelemente mit der von ihm gewünschten Rückstellkraft finden, die einerseits genug Federweg aufweisen, um die gewünschten Kippwinkel zu realisieren, die andererseits aber auch keinen zu langen Federweg haben, was eine unnötig große Bauhöhe und damit auch ein erhöhtes Verletzungsrisiko zur Folge hätte.

Eine andere im Stand der Technik bekannte Möglichkeit, die Rückstellkräfte, die einer Verkippung der Stützfläche entgegenwirken, an die unterschiedlichen Bedürfnisse von Benutzer anzupassen, besteht in der Verwendung von Federelementen, deren Federkraft verändert werden kann, z.B. einer Luftfederung. Wie zuvor aber bereits dargestellt, ist die Verwendung einer Luftfederung konstruktiv aufwendig und sind die Komponenten einer Luftfederung vergleichsweise teuer in der Herstellung. Demgegenüber ist eine Rückstellvorrichtung mit austauschbaren Federelementen wesentlich einfacher und kostengünstiger herzustellen.

Des Weiteren umfasst die Rückstellvorrichtung der erfindungsgemäßen Vorrichtung kein einteiliges Federelement, sondern wenigstens vier einzelne Federelemente. Dies ist insofern von Vorteil, als sich durch die Kombination mehrerer Federlemente auch die Zahl der Anpassungsmöglichkeiten vervielfacht.

Im Gegensatz zu einem einteiligen Federelement müssen vier einzelne Federelemente auch nicht im Zentrum der Vorrichtung (definiert durch den Schnittpunkt der Kippachsen X und Y) angeordnet werden. Dies erweist sich als günstig, wenn der Benutzer wie vorgesehen mit seinen beiden Füßen bequem in Schulterbreite auf der Stützfläche steht. In diesem Fall ist die Kraft, die der Benutzer auf die Federelemente ausübt, nach dem Hebelgesetz umso geringer, je kleiner der Abstand seiner Füße zu den Federelementen ist. Wegen der günstigeren Hebelverhältnisse müssen also vier Federelemente, die in einem gewissen Abstand vom Zentrum der Vorrichtung angeordnet sind, insgesamt geringere Rückstellkräfte erzeugen als ein zentrales Federelement. Dies hat zum Vorteil, dass die Federelemente kleiner dimensioniert sein können, was sich wiederum günstig auf die Herstellungskosten auswirkt.

Ein weiterer Vorteil gegenüber einem zentralen Federelement ist es, dass die mindestens vier einzelnen, dezentral angeordneten Federelemente nicht zusätzlich die Funktion übernehmen müssen, Stützteil und Basisteil fest miteinander zu verbinden. Es ist daher möglich im Zentrum der Vorrichtung eine gesonderte Lagerung bzw. Verbindung zwischen Stützteil und Basisteil vorzusehen. In diesem Fall muss also zwischen den Federelementen und dem Basisteil sowie zwischen den Federelementen und dem Stützteil (bzw. einem mit dem Stützteil kippfest verbundenen Teil) keine feste Verbindung geschaffen werden, was die Auswechslung der Federelemente wesentlich erleichtert.

Dies ist jedoch nicht so zu verstehen, dass im Sinn der Erfindung nur solche Rückstellvorrichtungen dazu ausgelegt sind, auswechselbare Federlemente mit unterschiedlichen Abmessungen oder mit unterschiedlicher Federkraft einzusetzen, die über eine gesonderte Lagerung bzw. Verbindung zwischen Stützteil und Basisteil verfügen. Es ist durchaus auch möglich, auf eine gesonderte Lagerung zu verzichten und das Stützteil mit dem Basisteil über die vier Federelemente fest zu verbinden. Selbst wenn die vier Federelemente mit Stützteil oder/und Basisteil beispielsweise verschraubt wären, handelte es sich dennoch um eine erfindungsgemäße Vorrichtung, sofern sich diese Federelemente gegen andere Federlemente mit unterschiedlichen Abmessungen oder mit unterschiedlicher Federkraft austauschen lassen, ohne irreversible Veränderungen an der Gesamtvorrichtung vornehmen zu müssen.

Im Übrigen werden bei der erfindungsgemäßen Vorrichtung von den wenigstens vier Federelementen mindestens zwei parallel zur Längsachse X und mindestens zwei parallel zur Querachse Y angeordnet. Das ist insbesondere deshalb vorteilhaft, weil Benutzer, welche beispielsweise die gleichen Rückstellkräfte bei einer Gewichtsverlagerung zwischen linkem und rechtem Fuß bevorzugen (d.h. bei einer Verkippung um die Querachse Y), nicht immer auch die gleichen Rückstellkräfte bei einer Gewichtsverlagerung zwischen Vorfuß und Ferse (d.h. bei einer Verkippung um die Längsachse X) als passend empfinden.

Werden nämlich die Federelemente nicht an den Kippachsen X und Y ausgerichtet, lassen sich zwar auf diese Weise auch unterschiedliche Rückstellkräfte bei Gewichtsverlagerungen zwischen linkem Fuß und rechten Fuß bzw. zwischen Vorfuß und Ferse erzeugen. Das Verhältnis der Rückstellkräfte bei einer Verkippung um die Längsachse zu den Rückstellkräften bei einer Verkippung um die Querachse ist dann aber konstruktionsbedingt festgelegt, und zwar durch die Abstände, in denen die Federelemente jeweils zu den Kippachsen X und Y liegen.

Ordnet man dagegen bei vier Federelementen zwei parallel zur Längsachse X und zwei parallel zur Querachse Y angeordnet, hat dies den Vorteil, dass im Wesentlichen jeweils nur ein Federelement der Verkippung der Stützfläche entgegenwirkt, wenn die Stützfläche ausschließlich um die Längsachse X oder um die Querachse Y verkippt wird. Verkippt man beispielsweise die Stützfläche ausschließlich um die Längsachse X, wirkt im Wesentlichen nur eines der zwei Federelemente, die parallel zu der Querachse Y angeordnet sind, der Verkippung der Stützfläche entgegen, wenn man die verhältnismäßig geringen Rückstellkräfte vernachlässigt, die gleichzeitig auch noch von den zwei Federelementen erzeugt werden, die parallel zur Kippachse X angeordnet sind.

Folglich ist es mit dieser Anordnung der Federelemente möglich, nicht nur unterschiedliche Rückstellkräfte bei Gewichtsverlagerungen zwischen linkem Fuß und rechten Fuß bzw. zwischen Vorfuß und Ferse zu erzeugen, sondern auch das Verhältnis der Rückstellkräfte bei einer Verkippung um die Längsachse zu den Rückstellkräften bei einer Verkippung um die Querachse zu verändern. Diese Anordnung garantiert damit maximale Flexibilität bei der Anpassung der Rückstellkräfte an die unterschiedlichen Bedürfnisse von Benutzern.

In Weiterbildung der erfindungsgemäßen Vorrichtung wird vorgeschlagen, dass die Federelemente als Elastomerfedern ausgebildet sind, wobei hierunter alle Federlemente verstanden werden, deren Elastizität ganz überwiegend auf dem Effekt der Entropie-Elastizität beruht (im Gegensatz zur Energie-Elastizität).

Elastomerfedern eignen sich für den Einsatz in einer erfindungsgemäßen Vorrichtung deshalb besonders gut, weil sie beispielsweise im Vergleich zu Druckfedern aus Metall bei kurzen Federwegen relativ hohe Federkräfte aufbauen können. Dies ist jedoch die Voraussetzung dafür, die Bauhöhe der erfindungsgemäßen Vorrichtung in Abhängigkeit von den vorgegebenen Kippwinkeln zu minimieren. Eine minimierte Bauhöhe wiederum ist wünschenswert, um die Verletzungsgefahr bei einem Abrutschen von der Stützfläche so gering wie möglich zu halten.

Ein optimales Verhältnis von Bauhöhe und vorgegebenen Kippwinkeln wird dann erreicht, wenn die Verkippung der Stützfläche nicht durch die maximale Federkompression der Federelemente begrenzt wird, sondern durch den Anschlag des Stützteils auf dem Boden oder auf dem Basisteil. In diesem Fall hängt nämlich der maximale Kippwinkel der Stützfläche allein davon ab, wie lang die Stützfläche ist und in welcher Höhe sie über dem Boden gelagert wird. Damit jedoch die Verkippung der Stützfläche nicht mehr durch die maximale Federkompression der Federelemente begrenzt wird, ist es wiederum erforderlich, die Federlemente relativ nah zum Zentrum der Vorrichtung (definiert durch den Schnittpunkt der Kippachsen) anzuordnen.

Eine Anordnung der Federelemente in nur geringer Entfernung zum Zentrum der Vorrichtung stellt allerdings besondere Anforderungen an die Federlemente, und zwar aus folgenden Gründen: Zum einen ist der Federweg, der zum Aufbau der gewünschten Rückstellkraft zur Verfügung steht, umso geringer, je näher ein Federelement zum Zentrum der Vorrichtung angeordnet ist. Zum anderen wird aber auch die benötigte Rückstellkraft umso größer, je näher das Federelement zum Zentrum der Vorrichtung angeordnet ist - zumindest dann, wenn der Benutzer wie vorgesehen mit seinen beiden Füßen bequem in Schulterbreite auf der Stützfläche steht Je weiter nämlich bei einer Gewichtsverlagerung der Fuß des Benutzers (und damit der Punkt der Krafteinleitung) vom Zentrum der Vorrichtung entfernt ist, desto größer ist nach dem Hebelgesetz die Kraft, die der Benutzer auf das Federelement ausübt.

Es zeigt sich also, dass eine im Hinblick auf die Bauhöhe optimierte Vorrichtung voraussetzt, dass die verwendeten Federelemente bei kurzen Federwegen relativ hohe Federkräfte aufbauen können. Diese Anforderungen werden von Elastomerfedern besonders gut erfüllt.

Darüber hinaus eignen sich Elastomerfedern aber auch wegen ihrer leicht progressive Federkennlinie besonders gut für eine Verwendung in der erfindungsgemäßen Vorrichtung, da es erfahrungsgemäß von Benutzern als vorteilhaft empfunden wird, wenn die Rückstellkraft mit zunehmender Verkippung leicht ansteigt, da dies für den Benutzer das Halten der Balance auch bei größeren Kippwinkeln erleichtert.

Ferner wird vorgeschlagen, dass die Elastomerfedern auf Haltevorrichtungen aufgesteckt werden. Dies ermöglicht es einem Benutzer, die Elastomerfedern auf bequeme Weise und ohne Werkzeug auszutauschen, wenn er die Rückstellkräfte einem anderen Benutzergewicht anpassen möchte oder wenn die Elastomerfedern wegen Ermüdung oder Setzung ausgetauscht werden müssen.

Des Weiteren ist es vorteilhaft, aus Chloropren-Kautschuk oder Polyurethan gefertigte Elastomerfedern einzusetzen, die vorzugsweise nach einem Industriestandard, z.B. nach DIN 9835 genormt sind. Dies ist deshalb von Vorteil, weil genormte Elastomerfedern aus Chloropren-Kautschuk oder Polyurethan vergleichsweise billig in der Herstellung sind. Auch können diese Federelemente kostengünstig ausgetauscht werden, wenn nach längerem Gebrauch der erfindungsgemäßen Vorrichtung eine Setzung oder Ermüdung der Federelemente eintreten sollte.

Darüber hinaus wird vorgeschlagen, dass die Elastomerfedern eine Höhe zwischen 40mm und 60mm aufweisen. Denn Elastomerfedern dieser Höhe lassen sich zum einen so anordnen, dass die Stützfläche einen unter sportmedizinischen Gesichtspunkten wünschenswerten Kippwinkel von etwa 15° realisieren kann und dass die Verkippung dabei nicht durch die maximale Federkompression der Elastomerfedern begrenzt wird, sondern durch einen Anschlag der Standplatte auf dem Boden. Dies ist aber - wie bereits erläutert - die Voraussetzung für eine optimierte Bauhöhe. Obwohl die Elastomerfedern zu diesem Zweck relativ nah zum Zentrum der Vorrichtung angeordnet werden müssen und sich dadurch - wie ebenfalls bereits erläutert - eher ungünstige Hebelverhältnisse ergeben, erzeugen Elastomerfedern der vorgeschlagenen Höhe zum anderen auch ausreichend große Rückstellkräfte, um die Vorrichtung an die Bedürfnisse von sehr schweren Benutzern anzupassen. Um also bei Kippwinkeln von ca. 15° eine möglichst geringe Bauhöhe der Gesamtvorrichtung zu erzielen und somit das Verletzungsrisiko für den Benutzer zu minimieren, erweisen sich Elastomerfedern der vorgeschlagenen Bauhöhe als besonders vorteilhaft.

In Weiterbildung der erfindungsgemäßen Vorrichtung wird ferner vorgeschlagen, dass sich die Federelemente parallel zur Längsachse X oder/und parallel zur Querachse Y versetzen lassen, da auf diese Weise die Rückstellkräfte noch flexibler und genauer an die Bedürfnisse der Benutzer angepasst werden können.

Wird ein Federelement vom Zentrum der Vorrichtung, welches durch den Schnittpunkt der Kippachsen definiert wird, nach außen versetzt, verlängert sich bei einer Verkippung der Stützfläche in Richtung dieses Federelements der Federweg, wird das Federelement nach innen versetzt, verkürzt sich der Federweg. Je länger der Federweg ist, desto größer ist die von dem Federelement erzeugte und der Verkippung der Stützfläche entgegenwirkende Rückstellkraft, und umgekehrt.

Das Versetzen der Federelemente nach innen oder außen hat jedoch noch eine weitere Auswirkung, nämlich die Veränderung der Hebelverhältnisse. Die von einem auf der Stützfläche stehenden Benutzer auf die Federelemente ausgeübte Gewichtskraft ist umso größer, je weiter das Federelement nach innen versetzt wird, und umso kleiner, je weiter es nach außen versetzt wird.

Beispielsweise kann also ein schwerer Benutzer, der auf die Stützfläche hohe Gewichtskräfte ausübt, die Federelemente nach außen versetzen und dadurch gleichzeitig erreichen, dass er zum einen eine geringere Gewichtskraft auf die Federelemente ausübt und zum anderen die Federelemente eine höhere Rückstellkraft erzeugen.

Dieser doppelte Effekt, also die Verkürzung bzw. Verlängerung des Federwegs in Verbindung mit der Verlängerung bzw. Verkürzung des Hebels, führt dazu, dass die Federelemente auf einer nur relativ kurzen Strecke versetzt werden müssen, um eine Anpassung der Rückstellkräfte innerhalb eines großen Spektrums zu ermöglichen.

Werden die Rückstellkräfte durch eine Versetzung der Federelemente nach innen oder außen angepasst, und nicht wie beispielsweise in der in US 7,008,359 B2 beschriebenen Vorrichtung durch eine Vergrößerung bzw. Verkleinerung des Raum für eine elastische Verformung des Federelements, bewirkt dies auch keine nachteilige Einschränkung der Verkippbarkeit - jedenfalls dann nicht, wenn die Federelemente nicht so weit nach außen versetzt werden, dass durch die Verkippung die maximale Federkompression erreicht wird.

Ist also die erfindungsgemäße Vorrichtung nicht nur dazu ausgelegt, auswechselbare Federelemente mit unterschiedlichen Abmessungen oder mit unterschiedlicher Federkraft einzusetzen, sondern auch dazu, die Federelemente parallel zur Längsachse X oder/und parallel zur Querachse Y zu versetzen, müssen im Ergebnis sehr viel weniger auswechselbare Federelemente zur Verfügung stehen, um die Anpassung der Rückstellkräfte innerhalb eines sehr großen Spektrums zu erlauben.

Kommen beispielsweise Elastomerfedern zum Einsatz, können mit Elastomerfedern der Abmessungen 25 x 40 mm (parallel zur Querachse Y) und 32 x 50 mm (parallel zur Längsachse X) durch entsprechendes Versetzen Rückstellkräfte erzeugt werden, die einem Benutzergewicht im Bereich von ca. 15 kg bis ca. 60 kg angemessen sind. Mit Elastomerfedern der Abmessungen 32 x 50 mm (parallel zur Querachse Y) und 40 x 50 mm (parallel zur Längsachse X) werden durch entsprechendes Versetzen Rückstellkräfte erzeugt, die für ein Benutzergewicht im Bereich von ca. 40 kg bis ca. 150 kg passend sind. Durch die Kombination von 3 Paaren standardisierter Elastomerfedern kann also auf einfache und kostengünstige Weise hinsichtlich des Benutzergewichts ein Einsatzbereich von ca. 15kg bis ca. 150kg abgedeckt werden, sofern sich die Elastomerfedern zusätzlich nach innen oder außen versetzen lassen.

Ein weiterer Vorteil ist es schließlich, wenn alle vier Federelemente voneinander unabhängig nach innen oder nach außen versetzt werden können. Denn auf diese Weise lässt sich das Verhältnis der Rückstellkräfte in den verschiedenen Kipprichtungen nicht nur durch eine entsprechende Auswechselung der Federelemente verändern, sondern auch durch ein entsprechendes Versetzen der Federelemente. Durch das unabhängige Versetzen der vier Federelemente können also zum einen die Rückstellkräfte bei Gewichtsverlagerungen zwischen linkem Fuß und rechten Fuß bzw. zwischen Vorfuß und Ferse unterschiedlich eingestellt werden. Zum anderen lässt sich auch das Verhältnis der Rückstellkräfte bei einer Verkippung um die Längsachse zu den Rückstellkräften bei einer Verkippung um die Querachse verändern, was insbesondere für Benutzer mit gleichem Gewicht aber unterschiedlich großen Füßen von Vorteil ist.

Des Weiteren wird vorgeschlagen, dass die Federelemente jeweils in einer Führungsnut im Basisteil verschoben werden können. In dieser Ausführung können die einzelnen Federelemente stufenlos versetzt werden, was im Ergebnis eine sehr exakte Anpassung der Rückstellkräfte an die individuellen Anforderungen des einzelnen Benutzers erlaubt.

Nach einem weiteren Aspekt umfasst die erfindungsgemäße Vorrichtung eine Einstellvorrichtung, mit der alle Federelemente gleichzeitig versetzt werden können, wobei die Einstellvorrichtung vorzugsweise als drehbare Einstellscheibe mit kreisförmigen exzentrischen Langlöchern ausgebildet ist.

Eine Einstellvorrichtung ist dann von Vorteil, wenn beispielsweise die Vorrichtung im häufigen Wechsel von verschiedenen Personen benutzt wird, die unterschiedliche Einstellungen der Rückstellvorrichtung bevorzugen. Dann kann durch eine Einstellvorrichtung, die alle Federelemente gleichzeitig versetzt, auf eine einfache und schnelle Weise eine Anpassung an die Benutzervorgaben vorgenommen werden. Die Benutzung einer Einstellscheibe hat allerdings den Nachteil, dass das Verhältnis der Rückstellkräfte bei einer Verkippung um die Längsachse zu den Rückstellkräften bei einer Verkippung um die Querachse durch die Einstellvorrichtung festgelegt wird und nicht veränderbar ist.

Ist die Einstellvorrichtung als Einstellscheibe mit kreisförmigen exzentrischen Langlöchern ausgebildet, kann wegen der Untersetzung, mit welcher ein Drehen der Einstellscheibe eine Versetzung der Federelemente bewirkt, eine exakte Einstellung der Rückstellvorrichtung vorgenommen werden. Die Verwendung der Einstellscheibe ist darüber hinaus auch deshalb vorteilhaft, weil wegen der Selbsthemmung der Einstellscheibe eine gesonderte Fixierung der Federelemente nicht mehr notwendig ist.

Vorzugsweise umfasst die erfindungsgemäße Vorrichtung ferner eine Sensorvorrichtung zur Erfassung von Gewichtsverlagerungen des Körpers des Benutzers, damit die Vorrichtung nicht nur als Trainings- und Rehabilitationsgerät, sondern auch als Eingabegerät für einen Computer oder eine Spielkonsole benutzt werden kann.

Auf einfache Weise können Gewichtsverlagerungen des Benutzers erfasst werden, wenn die Sensorvorrichtung die Kipprichtung und den Kippwinkel der Stützfläche misst, da der Benutzer eine Verkippung der Stützfläche nur über eine Gewichtsverlagerung herbeiführen kann, vorausgesetzt, dass sich der Benutzer nicht irgendwo festhält, wovon allerdings bei einer Verwendung der Vorrichtung für Gleichgewichtsübungen oder Gleichgewichtsspielen auszugehen ist. Es versteht sich, dass es sich bei dieser Erfassungsmethode nur um eine relative Erfassung von Gewichtsverlagerungen eines Benutzers handelt, da der Kippwinkel der Stützfläche nicht allein von der auf die Stützfläche ausgeübten Kraft abhängt, sondern auch von den Rückstellkräften, die mittels der Rückstellvorrichtung vom Benutzer eingestellt wurden. Selbstverständlich können Gewichtsverlagerungen des Benutzers aber nicht nur über eine Messung des Kippwinkels der Stützfläche erfasst werden, sondern beispielsweise auch durch Kraftmesser, die in die Standfüße der erfindungsgemäßen Vorrichtung eingebaut werden.

In Weiterbildung der erfindungsgemäßen Vorrichtung wird ferner vorgeschlagen, dass das Stützteil entlang einer Hochachse Z vertikal beweglich ist, dass die erfindungsgemäße Vorrichtung eine Rückstellvorrichtung zur Erzeugung einer Rückstellkraft umfasst, die einer Vertikalbewegung des Stützteils entgegenwirkt, und dass die erfindungsgemäße Vorrichtung eine Sensorvorrichtung umfasst, die Vertikalbeschleunigungen des Körpers des Benutzers erfasst.

Umfasst die erfindungsgemäße Vorrichtung eine Sensorvorrichtung, mit der nicht nur Gewichtsverlagerungen, sondern auch Vertikalbeschleunigungen des Körpers des Benutzers erfasst werden, erweitert dies die Anwendungsmöglichkeiten der erfindungsgemäßen Vorrichtung als Eingabegerät für einen Computer oder eine Spielkonsole. So können beispielsweise bei der Simulation von Sportarten wie Skateboardfahren, Snowboardfahren oder Wellenreiten Sprungbewegungen in der virtuellen Umgebung durch tatsächliche Sprungbewegungen des Benutzers gesteuert werden, was die Simulation realitätsnäher macht und den Eindruck einer virtuellen Realität verstärkt.

Auf einfache Weise können Vertikalbeschleunigungen des Benutzers erfasst werden, wenn das Stützteil entlang einer Hochachse Z vertikal beweglich ist und die erfindungsgemäße Vorrichtung eine Rückstellvorrichtung zur Erzeugung einer Rückstellkraft umfasst, die einer Vertikalbewegung des Stützteils entgegenwirkt. In diesem Fall kann die Sensorvorrichtung die vertikale Bewegung der Stützfläche entlang der Hochachse Z messen und damit mittelbar Vertikalbeschleunigungen des Körpers des Benutzers erfassen. Denn der Benutzer kann eine Veränderung der vertikalen Lage der Stützfläche nur über eine vertikale Beschleunigung seines Körperschwerpunktes herbeiführen, vorausgesetzt, dass sich der Benutzer nicht irgendwo festhält, wovon allerdings bei einer Verwendung der Vorrichtung für Gleichgewichtsübungen oder Gleichgewichtsspielen auszugehen ist. Es versteht sich, dass es sich bei dieser Erfassungsmethode nur um eine relative Erfassung von Vertikalbeschleunigungen eines Benutzers handelt, da die Vertikalbewegung der Stützfläche nicht nur von der auf die Stützfläche ausgeübten Kraft abhängt, sondern auch von den Rückstellkräften, die von der Rückstellvorrichtung erzeugt werden. Selbstverständlich können Vertikalbeschleunigungen des Körpers des Benutzers aber nicht nur über eine Messung der Vertikalbewegung der Stützfläche erfasst werden, sondern beispielsweise auch durch Kraftmesser, die in die Standfüße der erfindungsgemäßen Vorrichtung eingebaut werden.

In Weiterbildung der erfindungsgemäßen Vorrichtung wird ferner vorgeschlagen, dass das Stützteil um eine Hochachse Z drehbar ist, dass die erfindungsgemäße Vorrichtung eine Drehrückstellvorrichtung zur Erzeugung einer Rückstellkraft umfasst, die einer Verdrehung des Stützteils entgegenwirkt, und dass die erfindungsgemäße Vorrichtung eine Sensorvorrichtung umfasst, die Drehbewegungen des Benutzers erfasst.

Diese Ausführungsform erweitert zunächst die Anwendungsmöglichkeiten der erfindungsgemäßen Vorrichtung als Trainings- und Rehabilitationsgerät, da eine Verdrehung der Stützfläche bei Überwindung einer der Verdrehung entgegenwirkenden Drehrückstellkraft weitere Muskelgruppen des Benutzers beansprucht.

Umfasst die erfindungsgemäße Vorrichtung darüber hinaus eine Sensorvorrichtung zur Erfassung der Drehbewegungen des Benutzers, erweitert dies außerdem die Anwendungsmöglichkeiten der erfindungsgemäßen Vorrichtung als Eingabegerät für einen Computer oder eine Spielkonsole. So können beispielsweise bei der Simulation von Sportarten wie Skateboardfahren, Snowboardfahren oder Wellenreiten Drehbewegungen in der virtuellen Umgebung durch tatsächliche Drehbewegungen des Benutzers gesteuert werden, was die Simulation realitätsnäher macht und den Eindruck einer virtuellen Realität verstärkt.

Des Weiteren wird vorgeschlagen, dass das Stützteil im und gegen den Uhrzeigersinn beliebig oft um 360° drehbar ist. Dies ist wiederum vorteilhaft, wenn die Vorrichtung für die Simulation von Sportarten wie Skateboardfahren, Snowboardfahren oder Wellenreiten eingesetzt wird, da sich bei diesen Sportarten die jeweiligen Sportgeräte ebenfalls beliebig oft im und gegen den Uhrzeigersinn um 360° verdrehen lassen. Eine auf diese Weise frei drehbare Standplatte macht also die Simulation noch realitätsnäher und verstärkt weiter den Eindruck einer virtuellen Realität. Doch auch wenn die Vorrichtung als Trainings- und Rehabilitationsgerät eingesetzt wird, stellt eine frei drehbare Standplatte höhere Anforderungen an den Benutzer und ist vielseitiger einsetzbar als eine Standplatte, die nur bis zu einem bestimmten Winkel verdreht werden kann.

Vorgeschlagen wird ferner, dass die Drehrückstellvorrichtung eine Rückstellkraft erzeugt, die das Stützteil bei einer Verdrehung in eine Ausgangslage zurückführt und dass die Rückstellkraft ihr Maximum erreicht, wenn das Stützteil aus dieser Ausgangslage im oder gegen den Uhrzeigersinn um eine halbe Umdrehung verdreht wird. Dies ist wiederum dann besonders von Vorteil, wenn die erfindungsgemäße Vorrichtung als Eingabegerät für die Computersimulation von Sportarten wie Skateboardfahren oder Snowboardfahren dient. In diesem Fall wird der Benutzer die Gesamtvorrichtung so aufstellen, dass deren Längsachse X zur Ebene des Bildschirms des Computers oder der Spielkonsole senkrecht ausgerichtet ist, weil diese Ausrichtung der Ausrichtung des simulierten Sportgeräts bei einer Geradeausfahrt entspricht.

Übt der Benutzer ein Drehmoment auf die Standplatte aus, welches die maximale Rückstellkraft, die sich bei einer Verdrehung um 180° aufbaut, nicht überwindet, wird die Standplatte durch die Rückstellkraft entgegengesetzt der vom Benutzer eingeleiteten Drehrichtung in die Ausgangslage zurückgeführt. Übt der Benutzer dagegen ein Drehmoment auf die Standplatte aus, welches die maximale Rückstellkraft bei 180° überwindet, wird die aufgebaute Rückstellkraft und das eventuell noch überschüssige Drehmoment des Benutzers die Standplatte in der vom Benutzer eingeleiteten Drehrichtung in die Ausgangslage zurückführen (womit dann der Benutzer eine Umdrehung um 360° vollzogen hat). Der Benutzer wird sich also nach Ausführung einer Drehbewegung und erfolgter Rückstellung stets in der gleichen Position zum Bildschirm befinden wie vor Ausführung der Drehbewegung, was im Ergebnis die Steuerung der Computersimulation erleichtert. Darüber hinaus unterstützt diese Ausführung der Drehrückstellvorrichtung den Eindruck einer realitätsnahen Simulation, da in der Realität Skateboards oder Snowboards ebenfalls die Tendenz aufweisen, sich längs der Fahrtrichtung auszurichten.

Alternativ wird vorgeschlagen, dass die Drehrückstellvorrichtung eine Rückstellkraft erzeugt, welche das Stützteil bei einer Verdrehung in eine von zwei Ausgangslagen zurückführt, die zueinander um 180° entgegengesetzt sind, und dass die Rückstellkraft ihr Maximum erreicht, wenn das Stützteil aus diesen beiden Ausgangslagen im oder gegen den Uhrzeigersinn um eine viertel Umdrehung verdreht wird.

Übt bei dieser Ausführung der Benutzer ein Drehmoment auf die Standplatte aus, welches die maximale Rückstellkraft, die sich bei einer Verdrehung um 90° aufbaut, nicht überwindet, wird die Standplatte durch die Rückstellkraft entgegengesetzt der vom Benutzer eingeleiteten Drehrichtung in die erste Ausgangslage zurückgeführt. Übt der Benutzer dagegen ein Drehmoment auf die Standplatte aus, welches die maximale Rückstellkraft bei 90° überwindet, wird die aufgebaute Rückstellkraft und das eventuell noch überschüssige Drehmoment des Benutzers die Standplatte in der vom Benutzer eingeleiteten Drehrichtung in die zweite Ausgangslage lenken, welche zu der ersten Ausgangslage um 180° entgegengesetzt ist. Der Benutzer wird sich also nach Ausführung einer Drehbewegung und erfolgter Rückstellung stets in der gleichen oder in einer hierzu spiegelverkehrten Position zum Bildschirm befinden wie vor Ausführung der Drehbewegung.

Im Vergleich zu der zuvor beschriebenen Lösung mit nur einer Ausgangslage ist dies insoweit von Vorteil, als es für manche Benutzer zu schwierig sein könnte, bei Umdrehungen von 360° das Gleichgewicht zu halten. Den Eindruck einer realitätsnahen Simulation würde im Übrigen auch diese Ausführung mit zwei Ausgangslagen unterstützen, da in der Realität beispielsweise Skateboards oder Snowboards ebenfalls in zwei unterschiedlichen Stellungen benutzt werden können (je nachdem, welcher Fuß in Fahrtrichtung vorne steht, werden diese Stellungen als 'regular' oder 'goofy' bezeichnet).

Eine Drehrückstellvorrichtung mit den vorerwähnten Eigenschaften ist kostengünstig und gleichzeitig kompakt herzustellen, wenn sie ein Gegenelement in der Form eines geraden Zylinders umfasst, wobei dieses Gegenelement drehfest mit der Standplatte verbunden ist, sowie mindestens ein Federelement, das an der Mantelfläche dieses zylindrischen Gegenelements angreift.

Weist die Grundfläche des zylindrischen Gegenelements eine symmetrische ovale Form auf, wird damit auf einfache Weise eine Drehrückstellvorrichtung verwirklicht, die das Stützteil bei einer Verdrehung in eine Ausgangslage zurückführt und deren Rückstellkraft ihr Maximum erreicht, wenn das Stützteil aus dieser Ausgangslage im oder gegen den Uhrzeigersinn um eine halbe Umdrehung verdreht wird.

Wird darüber hinaus die symmetrische ovale Grundform des zylindrischen Gegenelements dergestalt abgewandelt, dass an wenigstens einem Scheitelpunkt der ovalen Grundform eine Einbuchtung vorgesehen ist, kann das Federelement, das an der Mantelfläche dieses zylindrischen Gegenelements angreift, in dieser Einbuchtung einrasten. Diese Verrastung verhindert, dass sich das Stützteil aus der Ausgangslage bewegt, wenn der Benutzer beim Verkippen der Standfläche durch Gewichtsverlagerungen auf der Standfläche ungewollt auch kleinere Drehbewegungen ausführt, wie.es beispielsweise vorkommen kann, wenn ein Benutzer die Arme bewegt, um sein Gleichgewicht wiederzufinden. Würde in diesem Fall auch noch eine Drehung der Standfläche eingeleitet, könnte dies dazu führen, dass der Benutzer sein Gleichgewicht ganz verliert und sich nicht mehr auf der Standfläche halten kann. Die erfindungsgemäße Verrastung in der Ausgangslage dient somit der Sicherheit des Benutzers.

Weist dagegen die Grundfläche des zylindrischen Gegenelements eine elliptische Form auf, wird damit auf einfache Weise eine Drehrückstellvorrichtung verwirklicht, die das Stützteil bei einer Verdrehung in eine von zwei Ausgangslagen zurückführt, die zueinander um 180° entgegengesetzt sind, und deren Rückstellkraft ihr Maximum erreicht, wenn das Stützteil aus diesen beiden Ausgangslagen im oder gegen den Uhrzeigersinn um eine viertel Umdrehung verdreht wird.

Vorzugsweise wird die elliptische Grundform des zylindrischen Gegenelements dergestalt abgewandelt, dass an zwei Scheitelpunkten der elliptischen Grundform eine Einbuchtung vorgesehen ist, und zwar vorzugsweise an den beiden Nebenscheiteln, d.h. an den beiden Punkten mit dem geringsten Abstand zum Mittelpunkt der Ellipse. Auf diese Weise kann eine Verrastung des Stützteils in zwei zueinander um 180° entgegengesetzten Ausgangslagen erreicht werden. Dies hat für die Sicherheit des Benutzers dieselben Vorteile, die bereits zuvor bei der erfindungsgemäßen Vorrichtung mit einer Verrastung in nur einer Ausgangslage erläutert wurden.

Ferner wird vorgeschlagen, dass das Federelement ein Kontaktelement umfasst, dessen Kontaktfläche an der Mantelfläche des zylindrischen Gegenelements abrollt. Durch dieses Abrollen wird die Reibung zwischen dem Federelement und dem Gegenelement minimiert, wodurch gewährleistet wird, dass das Stützteil auch in Winkelstellungen mit ungünstigen Hebelverhältnissen zuverlässig in seine Ausgangslage zurückgelenkt wird. Dies ist deshalb vorteilhaft, weil es die Handhabung der erfindungsgemäßen Vorrichtung leichter und sicherer macht, wenn sich der Benutzer nach Ausführung einer Drehbewegung stets in der gleichen Ausrichtung zu seiner Umgebung wiederfindet.

Des Weiteren ist es vorteilhaft, wenn in der Ausgangslage des Stützteils dieses Kontaktelement teilweise formschlüssig in der Einbuchtung des zylindrischen Gegenelements anliegt, da auf diese Weise verhältnismäßig wenig Geräusche entstehen, wenn das Stützteil in der Ausgangslage einrastet.

Nach einem weiteren Aspekt der Erfindung ist die Rückstellkraft, die einer Verdrehung der Stützfläche entgegenwirkt, einstellbar. Die ist deshalb vorteilhaft, weil beispielsweise ein Kind mit seiner Drehbewegung nur ein sehr viel geringeres Drehmoment auf die Standplatte ausüben kann als ein Erwachsener. Wäre die Drehrückstellkraft nicht einstellbar, müsste man also die Drehrückstellkraft sehr gering auslegen, damit auch Kinder noch imstande sind, eine vollständige Verdrehung des Stützteils auszulösen. Dies hätte allerdings für erwachsene Benutzer entscheidende Nachteile. Wie bereits erläutert, werden besonders durch die Bewegung der Arme oft ungewollt kleinere Drehmomente auf die Standplatte ausgeübt. Ist die Drehrückstellkraft sehr gering, würden insbesondere Erwachsene mit großer Körpermasse häufig Drehbewegungen des Stützteils auslösen, obwohl sie nur ein Verkippen der Standplatte durch eine Gewichtsverlagerung beabsichtigt hatten. Dies würde insbesondere für schwerere Erwachsene die Handhabung der erfindungsgemäßen Vorrichtung deutlich erschweren und könnte schlimmstenfalls zu Stürzen und Verletzungen führen, wenn ein Benutzer eine ungewollt eingeleitete Drehbewegung nicht mehr kontrollieren kann. Deshalb sollten bei einem sicheren und möglichst einfach zu handhabenden Balance Board auch die Drehrückstellkräfte einstellbar sein.

In Weiterbildung der erfindungsgemäßen Vorrichtung wird ferner vorgeschlagen, dass auf der Standplatte des Stützteils ein Tastenfeld mit mindestens zwei Tasten vorgesehen ist. Dies ist insoweit von Vorteil, als ein Benutzer bei der Verwendung der erfindungsgemäßen Vorrichtung als Eingabegerät für ein Computerspiel keine weiteren Eingabegeräte benötigt, um beispielsweise im Menü des Computerspiels zu navigieren.

Ferner wird vorgeschlagen, dass beim Betätigen der Tasten erst ein Signal ausgelöst wird, wenn die Oberfläche der Tasten tiefer liegt als die Oberfläche der Standplatte. Durch diese Ausführung wird gewährleistet, dass die Tasten nur gezielt mit der Fußspitze und nicht aus Versehen während einer Gleichgewichtsübung oder eines Gleichgewichtsspiels mit dem flach aufgestellten Fuß betätigt werden.

Nach einem weiteren Aspekt umfasst die erfindungsgemäße Vorrichtung schließlich eine Vibrationsvorrichtung, die Vibrationen auf das Stützteil überträgt und die durch Signale eines Computerprogramms gesteuert wird. Die Vorrichtung kann auf diese Weise dem Benutzer durch die Vibrationen eine haptische Rückmeldung über bestimmte in einem Computerspiel vorkommende Ereignisse vermitteln. Im Trainingsbereich können dem Benutzer auf diese Weise auch Warnungen übermittelt werden, beispielsweise wenn ein bestimmter Kippwinkel überschritten wird, welcher nach therapeutischen Gesichtspunkten oder wegen einer Verletzungsgefahr nicht überschritten werden soll.

Die erfindungsgemäße Vorrichtung für Gleichgewichtsübungen und Gleichgewichtsspiele mit veränderbaren Rückstellkräften, im Weiteren auch als DYNAMIC BOARD bezeichnet, soll nachfolgend anhand der beigefügten Zeichnungen näher erläutert werden. Es stellen dar:
- **Fig. 1**: Perspektivische Gesamtansicht des erfindungsgemäßen DYNAMIC BOARD;
- **Fig. 2**: Perspektivische Explosionsansicht der Vorrichtung;
- **Fig. 3**: Draufsicht auf die Standplatte mit Kennzeichnung des Schnittes A-A;
- **Fig. 4**: Vergrößerte Schnittansicht des Details II;

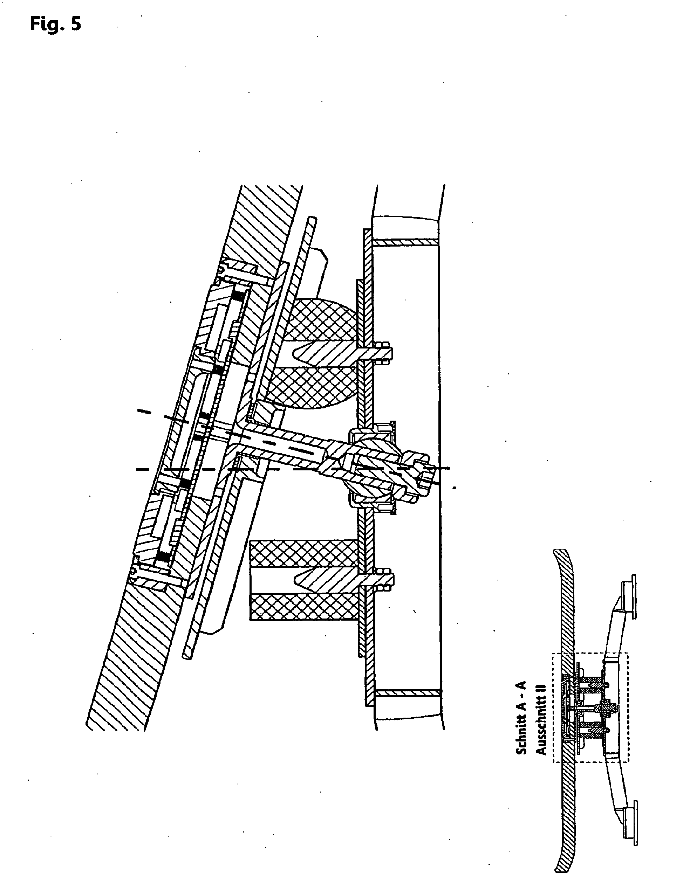

- **Fig. 5**: Vergrößerte Schnittansicht des Details II in verkippter Stellung;
- **Fig. 6**: Vergrößerte Darstellung der Schnittansicht B-B;
- **Fig. 7**: Vergrößerte Darstellung der Schnittansicht C-C;
- **Fig. 8**: Vergrößerte Darstellung der Schnittansicht C-C für eine alternative Ausführungsform;
- **Fig. 9**: Darstellung einer Trägerplatte für eine alternative Ausführungsform;

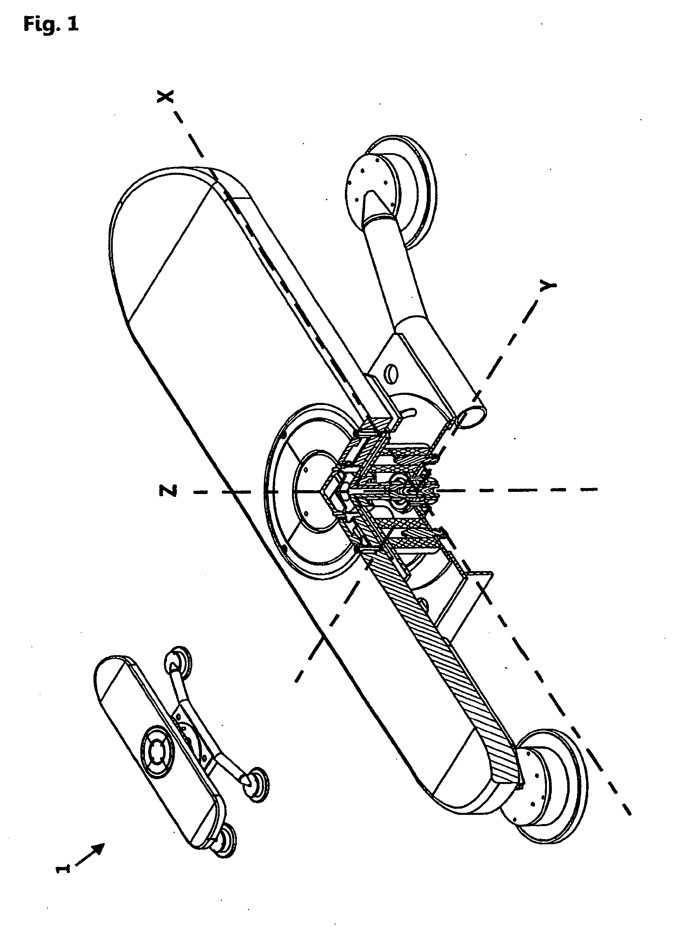

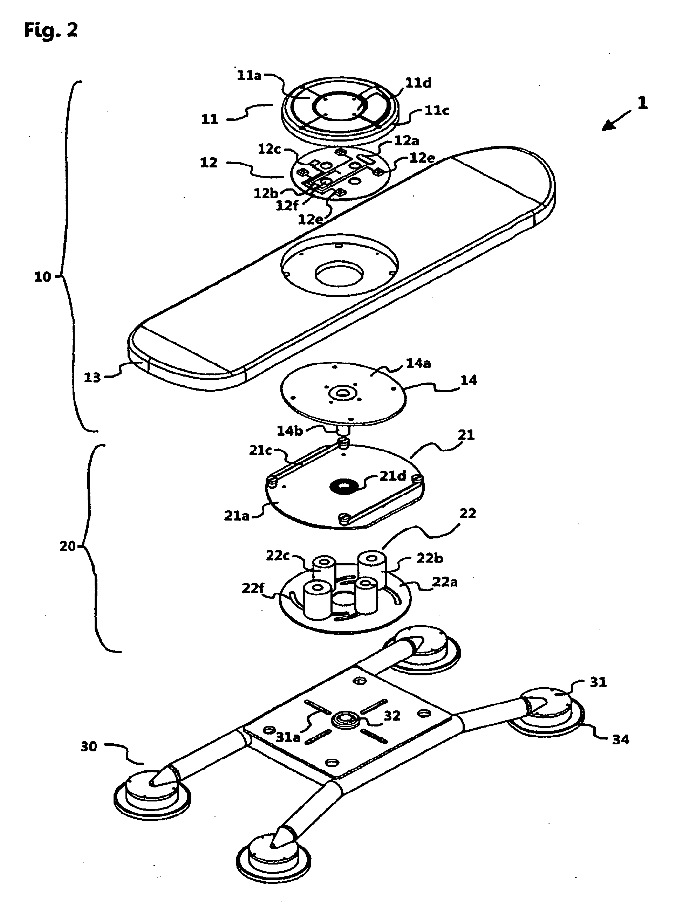

Das DYNAMIC BOARD ist in Figur 1 und Figur 2 ganz allgemein mit 1 bezeichnet. Es besteht aus drei Haupt-Baugruppen, nämlich dem Stützteil 10, der Rückstellvorrichtung 20 und dem Basisteil 30 (siehe Figur 2).

Das Stützteil 10 umfasst die Standplatte 13, die Tasteneinheit 11, die Elektronikeinheit 12 sowie die Trägerplatte mit Lagerzapfen 14. Die Trägerplatte mit Lagerzapfen 14 besteht aus einer elliptisch geformten Trägerplatte 14a und einem mit dieser fest verbundenen Lagerzapfen 14b, wobei der Lagerzapfen 14b am Mittelpunkt der elliptischen Trägerplatte 14a ausgerichtet ist. Der Mittelpunkt der elliptischen Trägerplatte 14a ist durch den Schnittpunkt der beiden Symmetrieachsen der Ellipse definiert. Die Standplatte 13 ist mit der Trägerplatte 14a verschraubt.

Die Elektronikeinheit 12 besteht aus der Bewegungssensoreinheit 12a, der Prozessoreinheit 12b, der Schnittstelleneinheit für den drahtlosen Datenaustausch 12c und der Batterie (nicht dargestellt). Bei der Bewegungssensoreinheit 12a handelt es sich um handelsübliche elektronische Messsysteme, vorzugsweise mikroelektromechanische (MEM) Gyroskope und Accelerometer. Die Elektronikeinheit 12 liegt in einer mittigen Vertiefung in der Standplatte 13 und ist mit der Standplatte 13 verschraubt.

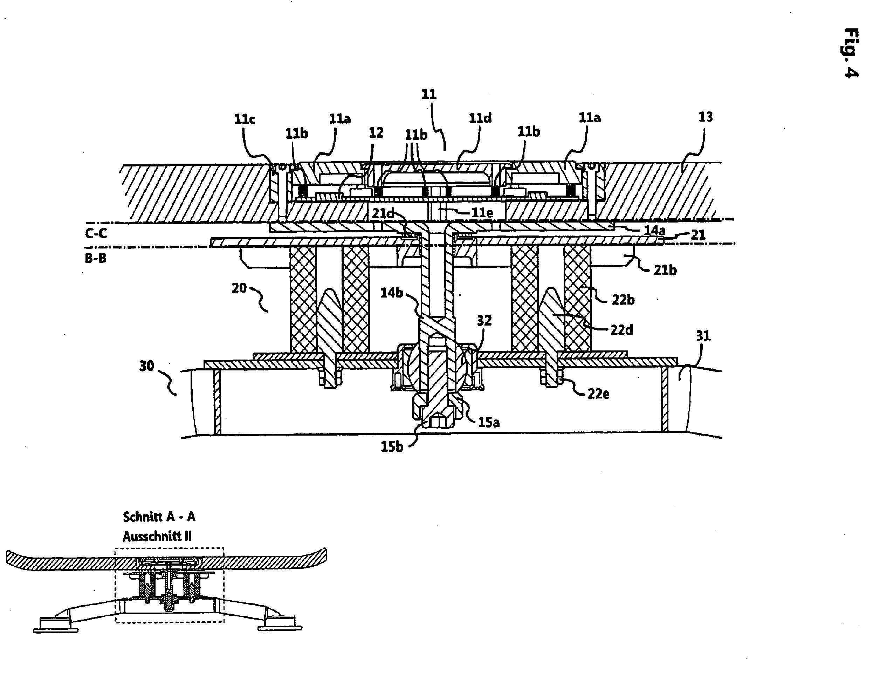

Die Tasteneinheit 11 (siehe auch Figur 4) ist über der Elektronikeinheit 12 ebenfalls in die mittige Vertiefung in der Standplatte 13 eingepasst. Den vier beweglichen Tasten 11a der Tasteneinheit 11 ist jeweils ein darunter liegendes Schalterelement 12e auf der Elektronikeinheit 12 zugeordnet. Die Tasten 11a werden unter Kompression von acht Druckfedern 11b innerhalb des Haltering 11c und der Halteplatte 11d gehalten. Der Haltering 11b ist mit der Standplatte 13 verschraubt. Die Schrauben zur Sicherung der Halteplatte 11d sind durch vier Distanzhülsen 11e hindurch mit der Trägerplatte 14a verschraubt. Die Distanzhülsen 11e verlaufen dabei durch vier Aussparungen 12f in der Elektronikeinheit 12. Die Oberfläche der vier Tasten 11a schließt weitgehend bündig mit der Oberfläche der Standplatte 13 ab. Der Kontakt der beweglichen Tasten 11a mit den jeweils darunter liegenden Schalterelementen 12e erfolgt erst, wenn die Tasten so weit nach unten gedrückt werden, dass die Oberfläche der Tasten 11a tiefer liegt als die Oberfläche der Standplatte 13.

Das Stützteil 10 und das Basisteil 30 werden durch die Trägerplatte mit Lagerzapfen 14 verbunden, indem der Lagerzapfen 14b durch das im Grundrahmen 31 befestigte Gelenklager 32 geführt und mittels der Schraube 15b gesichert wird (siehe Figur 4). Zwischen der Schraube 15b und dem beweglichen Teil des Gelenklagers 32 ist die Distanzhülse 15a eingesetzt, damit die Beweglichkeit des Gelenklagers 32 nicht eingeschränkt wird. Vorzugsweise ist das Gelenklager 32 nach DIN 648 und mit einem zulässigen Kippwinkel von mindestens 15° ausgeführt. Durch diese Anordnung kann das Stützteil 10 relativ zum Basisteil 30 um zwei horizontale und zueinander orthogonale Achsen X und Y verkippt, und um eine vertikale Hochachse Z gedreht werden. Zusätzlich lässt sich das Stützteil 10 in Richtung der Hochachse Z translatorisch bewegen.

Die vorstehend genannten Bewegungen des Stützteils 10 werden über die Bewegungssensoreinheit 12a der fest mit dem Stützteil verbundenen Elektronikeinheit 12 erfasst (siehe Figur 2). Mittelbar können über die Bewegungen des Stützteils 10 bestimmte Bewegungen des Benutzers erfasst werden, die dieser auf der Standplatte 13 ausführt, beispielsweise Gewichtsverlagerungen, Drehbewegungen und Sprungbewegungen.

Die Rückstellvorrichtung 20 (siehe Figur 2) umfasst die Unterbaugruppen Drehrückstelleinheit 21 und Kipprückstelleinheit 22. Die Drehrückstelleinheit 21 besteht aus dem Zwischenträger 21a, dem Axiallager 21d und zwei Blattfedereinheiten 21c. Der Zwischenträger 21a liegt flächig auf den Federelementen 22b und 22c der Kipprückstelleinheit 22 auf. Die Unterseite des Zwischenträgers 21a ist durch mit diesem fest verbundene Verstrebungen 21b (siehe Figur 4) versteift. Die Verstrebungen 21b verlaufen parallel nahezu über die gesamte Länge der Unterseite des Zwischenträgers 21a, wobei der Abstand zwischen ihnen so gewählt ist, dass sich die beiden Längsfederelemente 22b mittig zwischen die Verstrebungen einfügen. Dadurch wir verhindert, dass sich der Zwischenträger 21 a in Bezug auf die Kipprückstelleinheit 22 und das Basisteil 30 verdreht. Auf der Oberseite des Zwischenträgers 21 a sind die beiden Blattfedereinheiten 21 c befestigt.

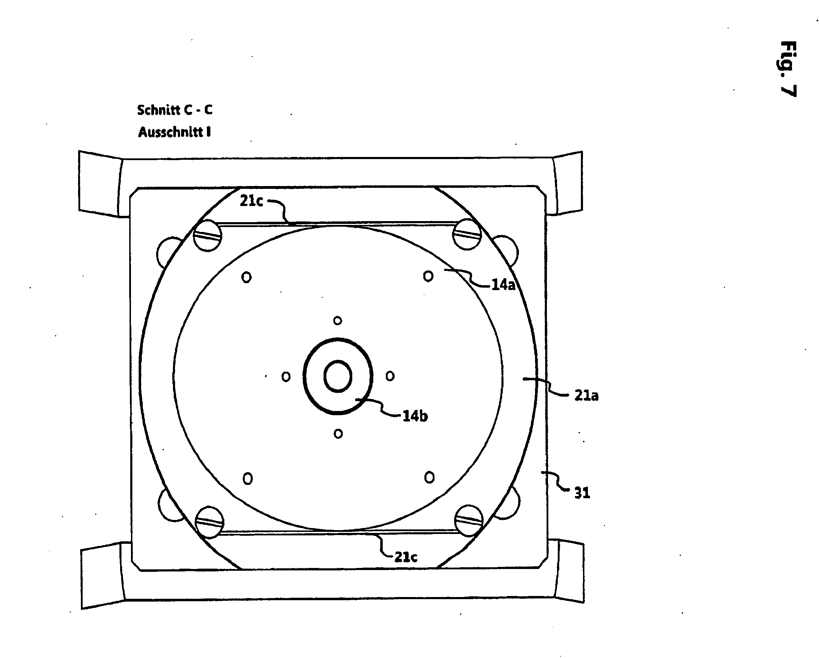

Die Trägerplatte mit Lagerzapfen 14 ist über den Lagerzapfen 14b relativ zum Zwischenträger 21a drehbar gelagert. Zwischen Trägerplatte mit Lagerzapfen 14 und Zwischenträger 21a liegt das Axiallager 21d. Das Axiallager 21d ist zur Minimierung der Bauhöhe vorzugsweise als Axial-Lager nach DIN 711 oder DIN 722 ausgeführt. Das Stützteil 10 lässt sich somit in Bezug auf die Rückstellvorrichtung 20 mit geringer Reibung beliebig verdrehen. Bei einer Drehung des Stützteils 10 um jeweils bis zu 90° werden die beiden Blattfedereinheiten 21c durch den Eingriff der elliptisch geformten Trägerplatte 14a vorgespannt und bewirken dadurch eine Rückstellung in die Ursprungslage. Bei einer Drehung des Stützteils 10 um mehr als 90° bewirkt die vörbeschriebene Anordnung eine Drehung des Stützteils 10 zu einer der Ursprungslage um 180° entgegengesetzten neuen Ausgangslage hin (siehe Figur 7).

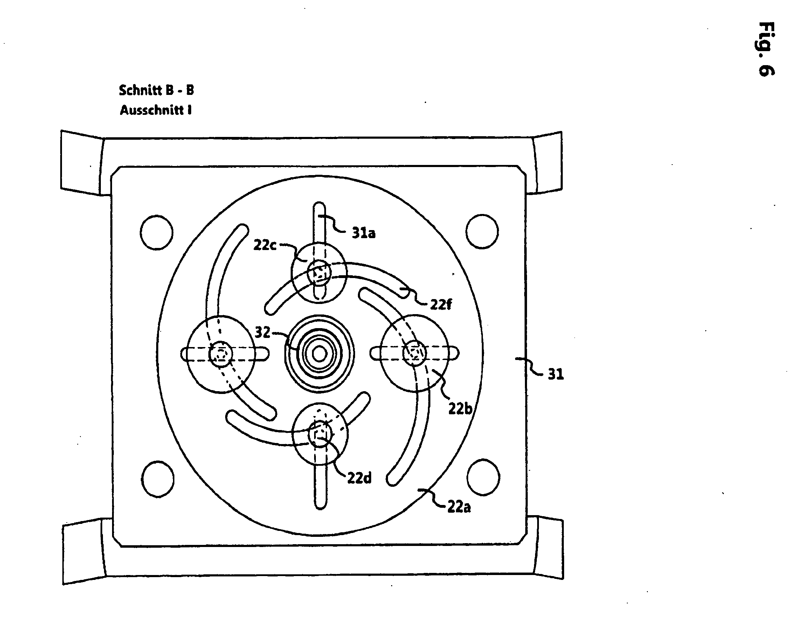

Die Kipprückstelleinheit 22 umfasst zwei Längsfederelemente 22b, zwei Querfederelemente 22c und vier Federelementhalter 22d (siehe Figur 4 und Figur 6). Die beiden Längsfederelemente 22b und die beiden Querfederelemente 22c sind jeweils von oben auf die vier Federelementhalter 22d aufgesteckt. Die vier Federelementhalter 22d sind im Grundrahmen 31 jeweils in ein Langloch 31 a eingesetzt und unterhalb des Grundrahmens 31 mit je zwei Flachmuttern 22e gesichert. Von den vier Langlöchern 31a im Grundrahmen verlaufen zwei parallel zur Längsachse X und zwei parallel zur Querachse Y (siehe Figur 1 und Figur 6). Mittels der in den Langlöchern 31a geführten Federelementhalter 22d sind also alle Federelemente 22b und 22c einzeln und stufenlos auf dem Basisteil 30 verschiebbar, wobei die Verschiebung parallel zur Längsachse X bzw. zur Querachse Y erfolgt.

Indem die Schraube 15b angezogen wird, verringert sich der Abstand zwischen Stützteil 10 und Basisteil 30 und damit auch der Abstand der Bauteile, an denen die Federelemente 22b und 22c angreifen (siehe Figur 4). Durch ein Anziehen der Schraube 15b können also die Federelemente 22b und 22c vorgespannt werden. Auch kann auf diese Weise eine altersbedingte Setzung (Schrumpf) der Federelemente 22b und 22c ausgeglichen werden. Durch ein Lockern der Schraube 15b kann dagegen eine eventuelle Vorspannung der Federelemente 22b und 22c gelöst werden, um ein Verschieben der Federelementhalter 22d auf dem Basisteil zu erleichtern.

Wahlweise kann die Kipprückstelleinheit 22 in Verbindung mit der Einstellscheibe 22a verwendet werden (siehe Figur 6). Diese ermöglicht es, durch deren Drehung alle Federelemente 22b und 22c gleichzeitig und in einem bestimmten Verhältnis zu verschieben. Die Federelementhalter 22d ragen dabei gleichzeitig durch die kreisförmigen, zur Hochachse Z exzentrisch angeordneten Langlöcher 22f der Einstellscheibe 22a und die Langlöcher 31a im Grundrahmen 31. Das Verschieben der Federelemente 22b und 22c erfolgt durch die hiermit realisierte Kulissenführung stufenlos und mit wenig Kraftaufwand.

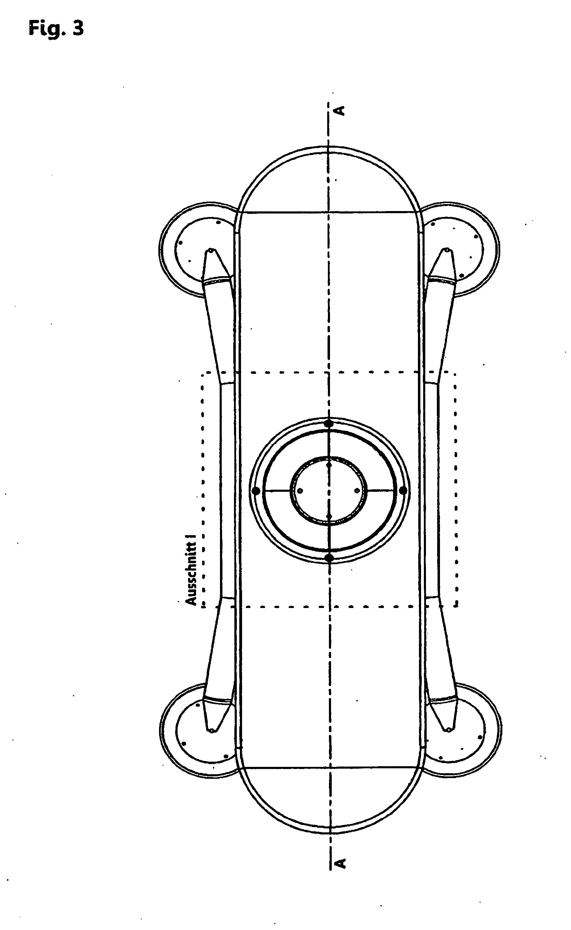

Das Basisteil 30 umfasst den Grundrahmen 31, das Gelenklager 32 und vier Gummiteller 34. Der Grundrahmen 31 weist vier zur Schnittachse A-A der Figur 3 symmetrisch angeordnete Standfüße auf, an denen jeweils die Gummiteller 34 angebracht sind. Die Position der vier Stützfüße am Grundrahmen 31 ist so gewählt, dass bei beliebiger Verlagerung des Körperschwerpunktes eines Benutzers auf der Standplatte 13 ein sicherer Stand des DYNAMIC BOARD gewährleistet ist.

Optional ist in der Standplatte 13 eine Vibrationsvorrichtung eingebaut (nicht gezeigt), die durch die Elektronikeinheit 12 angesteuert wird. Bei der Vibrationsvorrichtung handelt es sich um einen handelsüblichen Signalgeber, der mit elektromotorisch angetriebenen asymmetrischen Gewichten Vibrationen erzeugt und der beispielsweise aus Handsteuergeräten für Videospielkonsolen (sog. Gamepads) bekannt ist.

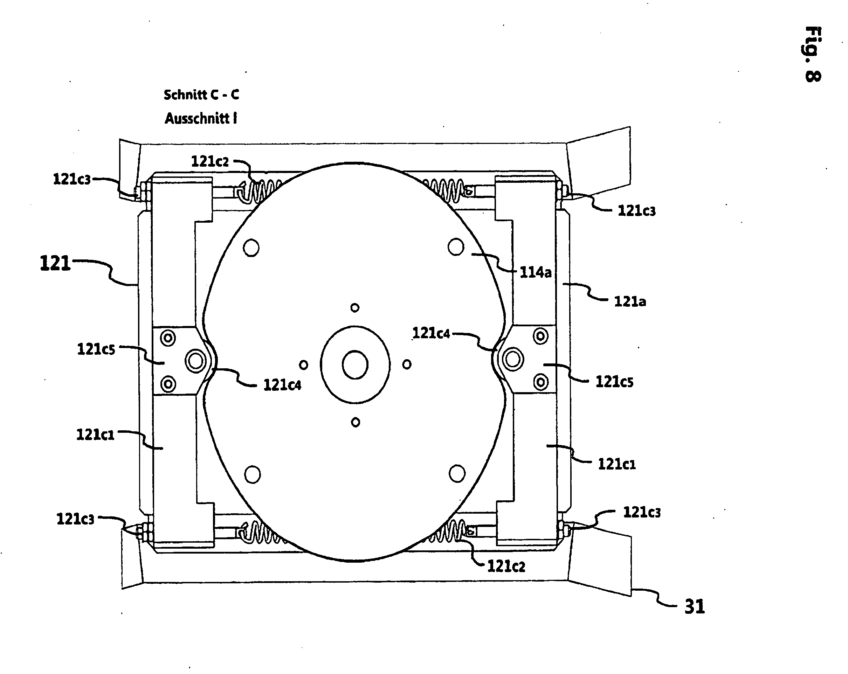

In Figur 8 ist die Drehrückstellvorrichtung einer alternativen Ausführungsform des DYNAMIC BOARD in einer zu Figur 7 analogen Darstellung gezeigt. Die Drehrückstellvorrichtung entspricht in wesentlichen Teilen der Ausführungsform gemäß Figur 7, weshalb in Figur 8 analoge Teile mit den gleichen Bezugszeichen versehen sind, allerdings vermehrt um die Zahl 100. Im Übrigen wird die alternative Ausführungsform gemäß Figur 8 im Folgenden nur insoweit beschrieben, als sie sich von jener gemäß Figur 7 unterscheidet.

Bei der Ausführungsform gemäß Figur 8 umfasst die Drehrückstelleinheit 121 den Zwischenträger 121a mit festen Verstrebungen 121b (nicht dargestellt) und die Untergruppe Zugfedereinheit 121c. Die Untergruppe Zugfedereinheit 121c umfasst zwei Schlitten 121c1 aus Polyacetal oder Polyformaldehyd, zwei Zugfedern 121c2, vier Gewindestangen 121c3, zwei Rillenkugellager 121c4 nach DIN 625 sowie zwei Halteplättchen mit Lagerwelle 121c5.

Der Zwischenträger 121 a ist als rechteckige Platte ausgeführt. Die Unterseite des Zwischenträgers 121a liegt dabei wie auch in der Ausführungsform gemäß Figur 7 flächig auf den Federelementen 22b und 22c der Kipprückstelleinheit 22 auf und ist durch je zwei mit dieser fest verbundenen Verstrebungen 21 b versteift. Genauso wie bei der ursprünglichen Ausführungsform wird dadurch verhindert, dass der Zwischenträger 121a in Bezug auf die Kipprückstelleinheit 22 und das Basisteil 30 verdreht wird (siehe Figur 4).

Die beiden Schlitten 121c1 sind mittels einer Lineargleitführung auf dem Zwischenträger 121a gelagert. Zu diesem Zweck ist der Zwischenträger 121a beidseitig plan bearbeitet. Die beiden Schlitten 121c1 sind an beiden Ende jeweils über eine Zugfeder 121c2 verbunden. Die Vorspannung beider Zugfedern 121c2 lässt sich durch Gewindestangen 121c3 an jedem Ende dieser Zugfedern stufenlos einstellen. An der Innenseite der Schlitten 121c1 ist mittig jeweils das Rillenkugellager 121c4 drehbar gelagert. Die Rillenkugellager 121c4 sind durch ein Halteplättchen mit Lagerwelle 121c5 gehalten, welches mit dem Schlitten 121c2 verschraubt wird.

Die Trägerplatte 114a weist eine elliptische Grundform auf, welche durch zwei Einbuchtungen unterbrochen wird. Die Einbuchtungen sind dort in die elliptische Grundform eingearbeitet, wo die beiden Nebenscheitel dieser Ellipse liegen, d.h. die beiden Punkte mit dem geringsten Abstand zum Mittelpunkt der Ellipse. Der Radius der Einbuchtungen korrespondiert mit dem Radius der beiden Rillenkugellager 121c4. Im Vergleich zu der Ausführungsvariante nach Figur 7 ist die Trägerplatte 114a um 90° verdreht angeordnet. Die Lineargleitführung der beiden Schlitten 121c1 erfolgt entlang der Längsachse der Gesamtvorrichtung.

Bedingt durch die Vorspannung der Zugfedern 121c2 und den formschlüssigen Sitz der Rillenkugellager 121c4 in den Einbuchtungen der Trägerplatte 114a wird das Stützteil 10 in zwei Ausgangslagen gegen eine Verdrehung relativ zum Zwischenträger 121a und zum Basisteil 30 verriegelt. In diesen beiden um 180° entgegengesetzten Ausgangslagen ist die Standplatte 13 längs zum Basisteil 30 ausgerichtet. Die Verriegelung lässt sich vom Benutzer durch das Einleiten eines Drehmomentes über die Standplatte 13 auf die hiermit fest verbundene Trägerplatte 114a lösen.

Je nach dem Grad der Verdrehung der Standplatte 13 und damit der Trägerplatte 114a ändert sich die Auslenkung der beiden Schlitten 121c1 und somit auch die Kraft, die von den Zugfedern 121c2 über die beiden Rillenkugellager 121 c4 auf die Trägerplatte 114a ausgeübt wird. Bei einer Verdrehung rollen die beiden Rillenkugellager 121c4 auf der Seitenfläche der Trägerplatte 114a ab. Durch dieses Abrollen wird die Reibung zwischen den Schlitten 121c1 und der Trägerplatte minimiert, wodurch gewährleistet wird, dass das Stützteils 10 auch in Winkelstellungen mit ungünstigen Hebelverhältnissen zuverlässig in eine der beiden Ausgangslagen zurückgelenkt wird.

Bei einer Verdrehung um 90° liegen die Rillenkugellager 121 c4 an den beiden Hauptscheiteln der elliptischen Trägerplatte 114a an, d.h. an den beiden Punkte mit dem größten Abstand zum Drehpunkt der Trägerplatte 114a. In dieser Position haben die Schlitten 121c1 die größtmögliche Auslenkung und die Zugfedern 121c2 die größtmögliche Spannung, wodurch die Rückstellkraft ihr Maximum erreicht. Übt der Benutzer ein Drehmoment auf die Standplatte 13 aus, welches diese maximale Rückstellkraft bei 90° nicht überwindet, wird das Stützteil 10 durch die Rückstellkraft entgegengesetzt der vom Benutzer eingeleiteten Drehrichtung in die erste Ausgangslage zurückgeführt und darin verrastet. Übt der Benutzer dagegen ein Drehmoment auf die Standplatte 13 aus, welches die maximale Rückstellkraft bei 90° überwindet, wird die aufgebaute Rückstellkraft und das eventuell noch überschüssige Drehmoment des Benutzers das Stützteil 10 in der vom Benutzer eingeleiteten Drehrichtung in die zweite Ausgangslage lenken, welche zu der ersten Ausgangslage um 180° entgegengesetzt ist, und darin verrasten.

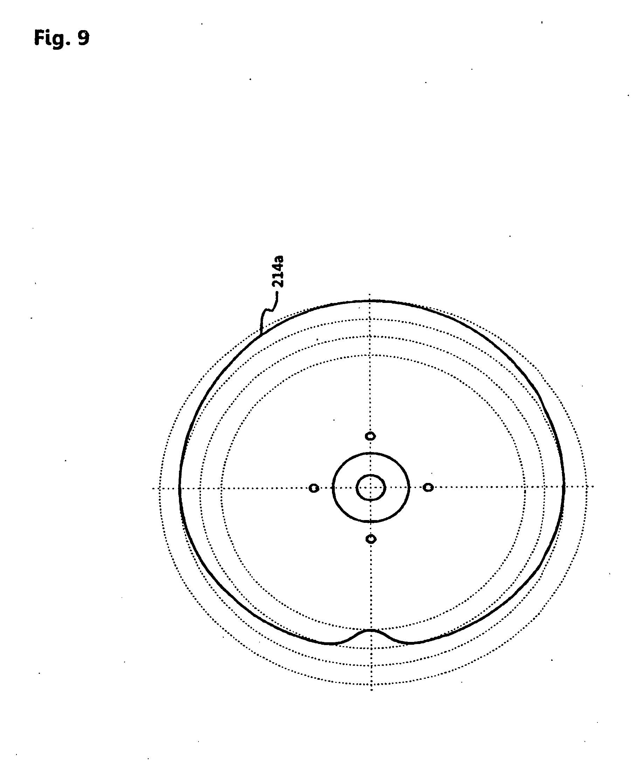

In Figur 9 ist eine alternative Ausführungsform der Trägerplatte 14a/114a des DYNAMIC BOARD dargestellt und als 214a bezeichnet. Bei Verwendung dieser Trägerplatte 214a muss die Drehrückstellvorrichtung gemäß Figur 8 dergestalt abgewandelt werden, dass das Zugfederelement 121c nur einen Schlitten 121c1 mit einem Rillenkugellager 121c4 umfasst und dass die beiden Zugfedern 121c2 am anderen Ende nicht mit einem zweiten Schlitten 121c1 verbunden sind, sondern fest mit dem Zwischenträger 121a.

Die Trägerplatte 214a weist eine symmetrische ovale Grundform auf. Der Drehpunkt der Trägerplatte 214a ist so angeordnet, dass er zu zwei gegenüberliegenden Scheitelpunkten der ovalen Grundform gleiche Abstände und zu den anderen beiden gegenüberliegenden Scheitelpunkten ungleiche Abstände aufweist. Die ovale Grundform der Trägerplatte 214a ist durch eine Einbuchtung unterbrochen. Die Einbuchtung ist an der Stelle in die ovale Grundform eingearbeitet, an welcher der Scheitelpunkt mit dem geringsten Abstand zum Drehpunkt liegt.

Bei einer Verdrehung um 180° liegt das eine Rillenkugellager 121c4 an dem Punkt der ovalen Trägerplatte 114a an, der den größten Abstand zu deren Drehpunkt aufweist. In dieser Position hat dann der Schlitten 121c1 die größtmögliche Auslenkung und die Zugfedern 121c2 haben die größtmögliche Spannung, wodurch die Rückstellkraft ihr Maximum erreicht. Übt der Benutzer ein Drehmoment auf die Standplatte 13 aus, welches die maximale Rückstellkraft bei 180° nicht überwindet, wird das Stützteil 10 durch die Rückstellkraft entgegengesetzt der vom Benutzer eingeleiteten Drehrichtung in die Ausgangslage zurückgeführt und darin verrastet. Übt der Benutzer dagegen ein Drehmoment auf die Standplatte 13 aus, welches die maximale Rückstellkraft bei 180° überwindet, wird die aufgebaute Rückstellkraft und das eventuell noch überschüssige Drehmoment des Benutzers das Stützteil 10 in der vom Benutzer eingeleiteten Drehrichtung in die Ausgangslage zurückführen und darin verrasten.

## Patentansprüche

1. Vorrichtung (1) für Gleichgewichtsübungen und Gleichgewichtsspiele eines Benutzers, umfassend
- ein Basisteil (30),
- ein Stützteil (10) für den Körper des Benutzers, das relativ zum Basisteil um eine Längsachse X und eine Querachse Y verkippbar ist, und
- eine Rückstellvorrichtung (20) zur Erzeugung einer Rückstellkraft, die einer Verkippung des Stützteils (10) entgegenwirkt,
wobei die Rückstellvorrichtung (20) wenigstens vier einzelne Federelemente (22b und 22c) umfasst und
die Federelemente (22b und 22c) in einem Abstand von dem durch den Schnittpunkt der Längsachse X und der Querachse Y definierten Zentrum der Vorrichtung angeordnet sind,
**dadurch gekennzeichnet,**
**dass** sich mindestens zwei der Federelemente (22b und 22c) in Bezug auf das Zentrum der Vorrichtung nach innen und nach außen versetzen lassen.

2. Vorrichtung nach Anspruch 1,
**dadurch gekennzeichnet, dass** sich die Federelemente (22b und 22c) in Richtung der Längsachse X oder/und der Querachse Y nach innen und nach außen versetzen lassen.

3. Vorrichtung nach Anspruch 1 oder 2,
**dadurch gekennzeichnet, dass** die Federlemente (22b und 22c) als Elastomerfedern ausgebildet sind, wobei die Elastomerfedern vorzugsweise
- aus Chloropren-Kautschuk oder Polyurethan gefertigt sind oder/und
- nach einem Industriestandard, vorzugsweise nach DIN 9835 genormt sind oder/und
- eine Höhe zwischen 40mm und 60mm aufweisen.

4. Vorrichtung nach einem der Ansprüche 1 bis 3,
**dadurch gekennzeichnet, dass** die Rückstellvorrichtung (20) dazu ausgelegt ist, auswechselbare Federelemente (22b und 22c) mit unterschiedlichen Abmessungen oder mit unterschiedlicher Federkraft einzusetzen, wobei vorzugsweise die Federelemente (22b und 22c) auf Haltevorrichtungen (22d) aufgesteckt werden.

5. Vorrichtung nach einem der Ansprüche 1 bis 4,
**dadurch gekennzeichnet, dass** die Federelemente (22b und 22c) in einer Führungsnut (31a) im Basisteil verschoben werden können.

6. Vorrichtung nach einem der Ansprüche 1 bis 5,
**dadurch gekennzeichnet, dass** durch eine Einstellvorrichtung (22a) alle Federelemente gleichzeitig versetzt werden können, wobei vorzugsweise die Einstellvorrichtung als drehbare Einstellscheibe (22a) mit kreisförmigen exzentrischen Langlöchern ausgebildet ist.

7. Vorrichtung nach einem der Ansprüche 1 bis 6,
**dadurch gekennzeichnet, dass** sie eine Sensorvorrichtung (12a) zur Erfassung von Gewichtsverlagerungen des Körpers des Benutzers umfasst.

8. Vorrichtung nach einem der Ansprüche 1 bis 7,
**dadurch gekennzeichnet,**
- **dass** das Stützteil (10) entlang einer Hochachse Z vertikal beweglich ist,
- **dass** die Vorrichtung (1) eine Rückstellvorrichtung (20) zur Erzeugung einer Rückstellkraft umfasst, die einer Vertikalbewegung des Stützteils entgegenwirkt, und
- **dass** vorzugsweise die Vorrichtung (1) eine Sensorvorrichtung (12a) umfasst, die Vertikalbeschleunigungen des Körpers des Benutzers erfasst.

9. Vorrichtung nach einem der Ansprüche 1 bis 8,
**dadurch gekennzeichnet,**
- **dass** das Stützteil (10) um eine Hochachse Z drehbar, vorzugsweise im und gegen den Uhrzeigersinn beliebig oft um 360° drehbar ist und
- **dass** die Vorrichtung (1) eine Drehrückstellvorrichtung (14a/21c; 114a/121c; 214a) zur Erzeugung einer Rückstellkraft, umfasst, die einer Verdrehung des Stützteils (10) entgegenwirkt.

10. Vorrichtung nach Anspruch 9,
**dadurch gekennzeichnet,**
- **dass** die Drehrückstellvorrichtung (14a/21c; 114a/121c; 214a) ein Gegenelement in der Form eines geraden Zylinders (14a; 114a; 214a) umfasst, wobei dieses Gegenelement drehfest mit der Standplatte (13) verbunden ist,
- **dass** die Drehrückstellvorrichtung (14a/21c; 114a/121c; 214a) mindestens ein Federelement (21c; 121c) umfasst, das an der Mantelfläche des zylindrischen Gegenelements (14a; 114a; 214a) angreift, und
- **dass** vorzugsweise das Federelement (21c; 121c) ein Kontaktelement (121c4) umfasst, dessen Kontaktfläche an der Mantelfläche des zylindrischen Gegenelements (14a; 114a; 214a) abrollt.

11. Vorrichtung nach Anspruch 9 oder 10,
**dadurch gekennzeichnet,**
- **dass** die Drehrückstellvorrichtung (14a/21c; 114a/121c; 214a) eine Rückstellkraft erzeugt, welche das Stützteil (10) bei einer Verdrehung in eine Ausgangslage zurückführt,
- **dass** die Rückstellkraft ihr Maximum erreicht, wenn das Stützteil (10) aus dieser Ausgangslage im oder gegen den Uhrzeigersinn um eine halbe Umdrehung verdreht wird,
- **dass** vorzugsweise die Grundfläche des zylindrischen Gegenelements (14a; 114a; 214a) eine symmetrische ovale Form aufweist,
- **dass** vorzugsweise die symmetrische ovale Grundform des zylindrischen Gegenelements (14a; 114a; 214a) dergestalt abgewandelt wird, dass an wenigstens einem Scheitelpunkt der ovalen Grundform eine Einbuchtung vorgesehen ist, und
- **dass** vorzugsweise in der Ausgangslage des Stützteils (10) das Kontaktelement (121c4) teilweise formschlüssig in der Einbuchtung des zylindrischen Gegenelements (14a; 114a; 214a) anliegt.

12. Vorrichtung nach Anspruch 9 oder 10,
**dadurch gekennzeichnet,**
- **dass** die Drehrückstellvorrichtung (14a/21c; 114a/121c; 214a) eine Rückstellkraft erzeugt, welche das Stützteil (10) bei einer Verdrehung in eine von zwei Ausgangslagen zurückführt, die zueinander um 180° entgegengesetzt sind,
- **dass** die Rückstellkraft ihr Maximum erreicht, wenn das Stützteil (10) aus diesen beiden Ausgangslagen im oder gegen den Uhrzeigersinn um eine viertel Umdrehung verdreht wird,
- **dass** vorzugsweise die Grundfläche des zylindrischen Gegenelements (14a; 114a; 214a) eine elliptische Form aufweist,
- **dass** vorzugsweise die elliptische Grundform des zylindrischen Gegenelements (14a; 114a; 214a) dergestalt abgewandelt wird, dass an zwei Scheitelpunkten der elliptischen Grundform eine Einbuchtung vorgesehen ist, und
- **dass** vorzugsweise in der Ausgangslage des Stützteils (10) das Kontaktelement (121c4) teilweise formschlüssig in der Einbuchtung des zylindrischen Gegenelements (14a; 114a; 214a) anliegt.

13. Vorrichtung nach einem der Ansprüche 9 bis 12,
**dadurch gekennzeichnet, dass** die Rückstellkraft, die einer Verdrehung der Stützfläche (10) entgegenwirkt, einstellbar ist.

14. Vorrichtung nach einem der Ansprüche 9 bis 13,
**dadurch gekennzeichnet, dass** sie eine Sensorvorrichtung (12a) umfasst, die Drehbewegungen des Benutzers erfasst.

15. Vorrichtung nach einem der Ansprüche 1 bis 14,
**dadurch gekennzeichnet, dass** auf der Standplatte (13) des Stützteils (10) ein Tastenfeld (11) mit mindestens zwei Tasten (11a) vorgesehen ist, wobei vorzugsweise beim Betätigen der Tasten (11a) ein Signal erst ausgelöst wird, wenn die Oberfläche der Tasten (11a) tiefer liegt als die Oberfläche der Standplatte (13).

## Claims

1. Apparatus (1) for balance exercises and balance games of a user, comprising
- a base part (30),
- a support part (10) for the body of the user which is tiltable relative to the base part around a longitudinal axis X and a transverse axis Y, and
- a restoring apparatus (20) for generating a restoring force that counteracts a tilt of the support part (10),
whereby the restoring apparatus (20) comprises at least four individual spring elements (22b and 22c), and
the spring elements (22b and 22c) are arranged at a distance from the centre of the apparatus that is defined by the intersection of longitudinal axis X and transverse axis Y,
**characterised in that**
at least two of the spring elements (22 b and 22 c) are capable of being offset inwards and outwards with respect to the centre of the apparatus.

2. Apparatus according to claim 1,
**characterised in that** the spring elements (22b and 22c) are capable of being offset inwards and outwards in the direction of longitudinal axis X or/and transverse axis Y.

3. Apparatus according to claim 1 or 2,
**characterised in that** the spring elements (22b and 22c) are provided to be elastomer springs, whereby the elastomer springs preferably
- are manufactured from chloroprene rubber or polyurethane or/and
- are standardised according to an industrial standard, preferably according to DIN 9835 or/and
- have a height of between 40 mm and 60 mm.

4. Apparatus according to any one of the claims 1 to 3,
**characterised in that** the restoring apparatus (20) is designed for the use of replaceable spring elements (22b and 22c) that have different dimensions or different spring force, whereby the'spring elements (22b and 22c) preferably are being plugged onto holding apparatuses (22d).

5. Apparatus according to any one of the claims 1 to 4,
**characterised in that** the spring elements (22b and 22c) can be shifted within a guiding groove (31a) in the base part.

6. Apparatus according to any one of the claims 1 to 5,
**characterised in that** all spring elements can be offset simultaneously through an adjustment apparatus (22a), whereby the adjustment apparatus preferably is designed as a rotatable adjustment disk (22a) having circular eccentric oblong holes.

7. Apparatus according to any one of the claims 1 to 6,
**characterised in that** it comprises a sensor apparatus (12a) for detection of weight shifts of the body of the user.

8. Apparatus according to any one of the claims 1 to 7,
**characterised**
- **in that** the support part (10) is movable vertically along a vertical axis Z,
- **in that** the apparatus (1) comprises a restoring apparatus (20) for generating a restoring force that counteracts a vertical motion of the support part, and
- **in that** the device (1) preferably comprises a sensor apparatus (12a) that detects vertical accelerations of the body of the user.

9. Apparatus according to any one of the claims 1 to 8,
**characterised**
- **in that** the support part (10) is rotatable about a vertical axis Z, preferably is rotatable by 360° in clockwise and counter-clockwise direction for any number of times, and
- **in that** the apparatus (1) comprises a rotational restoring apparatus (14a/21c; 114a/121c; 214a) for generating a restoring force that counteracts a rotation of the support part (10).

10. Apparatus according to claim 9,
**characterised**
- **in that** the rotational restoring apparatus (14a/21c; 114a/121c; 214a) comprises a counter-element in the form of a straight cylinder (14a; 114a; 214a), whereby said counter-element is connected to the platform (13) for co-rotation,
- **in that** the rotational restoring apparatus (14a/21c; 114a/121c; 214a) comprises at least one spring element (21 c; 121 c) that engages the lateral surface of the cylindrical counter-element (14a; 114a; 214a), and
- **in that** the spring element (21 c; 121c) preferably comprises a contact element (121c4) whose contact surface rolls off the lateral surface of the cylindrical counter-element (14a; 114a; 214a).

11. Apparatus according to claim 9 or 10,
**characterised**
- **in that** the rotational restoring apparatus (14a/21c; 114a/121c; 214a) generates a restoring force that returns the support part (10), when twisted, into a starting position,
- **in that** the restoring force reaches its maximum when the support part (10) is twisted from said starting position by half a turn in clockwise or counterclockwise direction,
- **in that** the base of the cylindrical counter-element (14a; 114a; 214a) preferably has a symmetrical oval shape,
- **in that** the symmetrical oval basic shape of the cylindrical counter-element (14a; 114a; 214a) preferably is modified appropriately such that an indentation is provided at at least one vertex of the oval basic shape, and
- **in that**, with the support part (10) being in the starting position, the contact element (121c4) preferably touches against the indentation of the cylindrical counter-element (14a; 114a; 214a) in a form-fitting manner.

12. Apparatus according to claim 9 or 10,
**characterised**
- **in that** the rotational restoring apparatus (14a/21c; 114a/121c; 214a) generates a restoring force that returns the support part (10), when twisted, into one of two starting positions that are opposite with respect to each other by 180°,
- **in that** the restoring force reaches its maximum when the support part (10) is twisted from said two starting positions by a quarter of a turn in clockwise or counter-clockwise direction,
- **in that** the base of the cylindrical counter-element (14a; 114a; 214a) preferably has an elliptical shape,
- **in that** the elliptical basic shape of the cylindrical counter-element (14a; 114a; 214a) preferably is modified appropriately such that an indentation is provided at two vertices of the elliptical shape, and
- **in that**, with the support part (10) being in the starting position, the contact element (121c4) preferably partially touches against the indentation of the cylindrical counter-element (14a; 114a; 214a) in a form-fitting manner.

13. Apparatus according to any one of the claims 9 to 12,
**characterised in that** the restoring force counteracting a rotation of the support surface (10) is adjustable.

14. Apparatus according to any one of the claims 9 to 13,
**characterised in that** it comprises a sensor apparatus (12a) that detects the rotational motions of the user.

15. Apparatus according to any one of the claims 1 to 14,
**characterised in that** a button area (11) with at least two push buttons (11 a) is provided on the platform (13) of the support part (10), whereby it is preferred that a signal is triggered upon actuation of the buttons (11 a) only once the surface of the buttons (11 a) is situated lower than the surface of the platform (13).

## Revendications

1. Dispositif (1) pour des exercices d'équilibre et des jeux d'équilibre d'un utilisateur comprenant
- une partie de base (30),
- une partie d'appui (10) pour le corps de l'utilisateur qui peut basculer par rapport à la partie de base sur un axe longitudinal X et un axe transversal Y, et
- un dispositif de rappel (20) pour produire une force de rappel qui agit contre une bascule de la partie d'appui (10),
sachant que le dispositif de rappel (20) comprend au moins quatre éléments de ressort individuels (22b et 22c) et
les éléments de ressort (22b et 22c) sont disposés à une distance du centre du dispositif défini par le point de section de l'axe longitudinal X et de l'axe transversal Y,
**caractérisé en ce**
**qu'**au moins deux des éléments de ressort (22b et 22c) se laissent déplacer vers l'intérieur et vers l'extérieur par rapport au centre du dispositif.

2. Dispositif selon la revendication 1,
**caractérisé en ce que** les éléments de ressort (22b et 22c) se laissent déplacer vers l'intérieur et vers l'extérieur dans le sens de l'axe longitudinal X et/ou de l'axe transversal Y.

3. Dispositif selon la revendication 1 ou 2,
**caractérisé en ce que** les éléments de ressort (22b et 22c) sont conçus en tant que ressorts en élastomère, sachant que les élastomères, de préférence,
- sont conçus en caoutchouc chloroprène ou en polyuréthane et/ou
- sont normalisés conformément à une norme industrielle, de préférence DIN 9835 et/ou
- présentent une hauteur entre 40 mm et 60 mm.

4. Dispositif selon l'une des revendications 1 à 3,
**caractérisé en ce que** le dispositif de rappel (20) est conçu pour régler des éléments de ressort (22b et 22c) interchangeables de différentes dimensions ou différentes forces, sachant que de préférence les éléments de ressort (22b et 22c) sont montés sur des dispositifs de fixation (22d).

5. Dispositif selon l'une des revendications 1 à 4,
**caractérisé en ce que** les éléments de ressort (22b et 22c) peuvent être poussés dans une rainure de guidage (31a) dans la pièce de base.

6. Dispositif selon l'une des revendications 1 à 5,
**caractérisé en ce que** tous les éléments de ressort peuvent être déplacés en même temps par le biais d'un dispositif de réglage (22a), sachant que de préférence, le dispositif de réglage est conçu en tant que disque de réglage (22a) avec des trous oblongs excentriques en cercle.

7. Dispositif selon l'une des revendications 1 à 6,
**caractérisé en ce qu'**il comprend un dispositif de détection (12a) pour détecter des déplacements de poids du corps de l'utilisateur.

8. Dispositif selon l'une des revendications 1 à 7,
**caractérisé en ce que**
- la partie d'appui (10) est mobile verticalement le long d'un axe vertical Z,
- le dispositif (1) comprend un dispositif de rappel (20) pour produire une force de rappel qui agit contre un mouvement vertical de la partie d'appui, et
- de préférence, le dispositif (1) comprend un dispositif de détection (12a) qui détecte des accélérations verticales du corps de l'utilisateur.

9. Dispositif selon l'une des revendications 1 à 8,
**caractérisé en ce que**
- la partie d'appui (10) est rotative sur un axe vertical Z, de préférence rotative à 360° dans le sens horaire et anti-horaire aussi souvent que souhaité et
- le dispositif (1) comprend un dispositif de rappel rotatif (14a/21c ;
114a/121c ; 214a) pour produire une force de rappel qui agit contre une rotation de la partie d'appui (10).

10. Dispositif selon la revendication 9,
**caractérisé en ce que**
- le dispositif de rappel rotatif (14a/21c; 114a/121c; 214a) comprend un contre-élément sous forme d'un cylindre droit (14a ; 114a ; 214a), sachant que ce contre-élément est relié fixe en rotation à la plaque de station debout (13),
- que le dispositif de rappel rotatif (14a/21c; 114a/121c ; 214a) comprend au moins un élément de ressort (21c; 121c) qui se met en prise sur la surface d'enveloppe du contre-élément cylindrique (14a ; 114a ; 214a) et
- que de préférence l'élément de ressort (21c ; 121c) comprend un élément de contact (121c4) dont la surface de contact se déroule sur la surface d'enveloppe du contre-élément cylindrique (14a ; 114a ; 214a).

11. Dispositif selon la revendication 9 ou 10,
**caractérisé en ce que**
- le dispositif de rappel rotatif (14a/21c ; 114a/121c ; 214a) produit une force de rappel qui ramène la partie d'appui (10) à une position de départ au cours d'une rotation,
- la force de rappel atteint son maximum lorsque la partie d'appui (10) est tournée d'une demi-rotation de cette position de départ dans le sens horaire ou anti-horaire,
- la surface de fond du contre-élément cylindrique (14a; 114a; 214a) présente de préférence une forme ovale symétrique,
- la forme de base ovale symétrique du contre-élément cylindrique (14a ; 114a; 214a) est de préférence ainsi modifiée que sur au moins un sommet de la forme de base ovale, une rainure est prévue, et
- de préférence, dans la position de départ de la partie d'appui (10), l'élément de contact (121 c4) repose partiellement par complémentarité de forme dans la rainure du contre-élément cylindrique (14a ; 114a ; 214a).

12. Dispositif selon la revendication 9 ou 10,
**caractérisé en ce que**
- le dispositif de rappel rotatif (14a/21 c ; 114a/121 c ; 214a) produit une force de rappel qui ramène la partie d'appui (10) à l'une de deux positions de départ qui sont déplacées de 180° l'une par rapport à l'autre, au cours d'une rotation,
- la force de rappel atteint son maximum lorsque la partie d'appui (10) est tournée d'un quart de rotation de ces deux positions de départ dans le sens horaire ou anti-horaire,
- la surface de fond du contre-élément cylindrique (14a; 114a; 214a) présente de préférence une forme elliptique,
- la forme de base elliptique du contre-élément cylindrique (14a ; 114a ; 214a) est de préférence ainsi modifiée que sur deux sommets de la forme de base elliptique, une rainure est prévue, et
- de préférence, dans la position de départ de la partie d'appui (10), l'élément de contact (121 c4) repose partiellement par complémentarité de forme dans la rainure du contre-élément cylindrique (14a ; 114a ; 214a).

13. Dispositif selon l'une des revendications 9 à 12,
**caractérisé en ce que** la force de rappel qui agit contre une rotation de la surface d'appui (10), est réglable.

14. Dispositif selon l'une des revendications 9 à 13,
**caractérisé en ce qu'**il comprend un dispositif de détection (12a) qui détecte des mouvements de rotation de l'utilisateur.

15. Dispositif selon l'une des revendications 1 à 14,
**caractérisé en ce qu'**un clavier numérique (11) comprenant au moins deux touches (11a) est prévu sur la plaque de station debout (13) de la partie de base (10), sachant que de préférence un signal est émis à l'actionnement des touches (11a) que lorsque la surface des touches (11a) repose plus profondément que la surface de la plaque de station debout (13).
